(19) **Europäisches Patentamt / European Patent Office / Office européen des brevets**

(11) **EP 2 734 278 B1**

(12) **FASCICULE DE BREVET EUROPEEN**

(45) Date de publication et mention
de la délivrance du brevet:
**09.09.2015 Bulletin 2015/37**

(51) Int Cl.:
*B01D 11/04* (2006.01)        *G21C 19/48* (2006.01)
*C22B 9/00* (2006.01)          *B01F 13/08* (2006.01)
*B01F 15/06* (2006.01)        *C22B 5/04* (2006.01)
*C22B 60/00* (2006.01)

(21) Numéro de dépôt: **12735898.4**

(22) Date de dépôt: **19.07.2012**

(86) Numéro de dépôt international:
**PCT/EP2012/064222**

(87) Numéro de publication internationale:
**WO 2013/011100 (24.01.2013 Gazette 2013/04)**

(54) **PROCEDE ET DISPOSITIF DE MISE EN CONTACT SANS MELANGE ET A HAUTE TEMPERATURE DE DEUX LIQUIDES NON MISCIBLES AVEC CHAUFFAGE ET BRASSAGE PAR INDUCTION**

VERFAHREN UND VORRICHTUNG ZUR KONTAKTIERUNG ZWEIER UNMISCHBARER FLÜSSIGKEITEN OHNE MISCHEN UND BEI HOHER TEMPERATUR MIT HEIZEN UND LÖTEN DURCH INDUKTION

PROCESS AND DEVICE FOR BRINGING TWO IMMISCIBLE LIQUIDS INTO CONTACT, WITHOUT MIXING AND AT HIGH TEMPERATURE, WITH HEATING AND BRAZING BY INDUCTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2011 FR 1156614**

(43) Date de publication de la demande:
**28.05.2014 Bulletin 2014/22**

(73) Titulaire: **Commissariat à l'Énergie Atomique et aux Énergies Alternatives
75015 Paris (FR)**

(72) Inventeurs:
• **FERAUD, Jean-Pierre**
  **F-84100 Orange (FR)**
• **VU, Xuan-Tuyen**
  **F-73000 Chambéry (FR)**
• **GANDI, Florent**
  **F-30330 Saint-André d'Olérargues (FR)**

(74) Mandataire: **Ahner, Philippe
BREVALEX
95, rue d'Amsterdam
75378 Paris Cedex 8 (FR)**

(56) Documents cités:
**WO-A2-2008/080853      FR-A1- 2 840 821
US-A1- 2002 005 357**

**Description**

**DOMAINE TECHNIQUE**

L'invention concerne un procédé et un dispositif de mise en contact sans mélange et à haute température de deux liquides non miscibles avec chauffage et brassage par induction. En particulier, l'invention concerne un procédé et un dispositif pour mettre en contact des métaux et des sels fondus à des températures élevées pouvant atteindre par exemple jusqu'à environ 1100K.

Le domaine technique de l'invention peut être défini de manière générale comme celui du transfert de matière, et plus particulièrement comme celui des techniques de mise en contact et de séparation chimiques à haute température et plus particulièrement d'extraction impliquant des liquides immiscibles.

Le domaine technique de l'invention est plus précisément mais non exclusivement celui des systèmes d'extraction liquide/liquide à haute température appelés aussi pyrocontacteurs dans lesquels une phase de sels liquides et une phase de métal fondu sont mises en contact. Le domaine technique de l'invention est notamment celui des procédés métallurgiques dans lesquels on réalise l'extraction et la désextraction d'actinides à haute température, généralement voisine de 800K et jusqu'à 1200 K.

Ces procédés sont basés sur la mise en contact d'un métal extractant, tel que de l'aluminium, en fusion, avec deux phases de sels fondus [1] [2].

**ÉTAT DE LA TECHNIQUE ANTÉRIEURE**

Le retraitement par voie classique, « hydrométallurgique », des combustibles nucléaires à haut taux de combustion nécessite des temps de refroidissement de plusieurs années afin de diminuer la teneur en éléments radioactifs responsables des phénomènes de radiolyse. Le retraitement à haute température par les procédés de pyrométallurgie présente l'intérêt d'une faible sensibilité aux phénomènes de radiolyse et d'un temps de refroidissement du combustible de seulement quelques mois.

Le principe chimique des procédés de pyrométallurgie est basé sur la fonte d'une phase d'aluminium qui est utilisée comme milieu extractant des actinides [16].

Des appareils pyrocontacteurs permettant le retraitement pyrométallurgique par extraction liquide/liquide sont ainsi décrits dans les documents [3], [4], [5], [6] et [7]. Dans ces appareils, la mise en contact des phases liquides et métal fondu est généralement effectuée en continu.

Les documents [3-4] décrivent des colonnes à garnissage en vrac, ou une colonne à plateau utilisant le système chlorure fondu/bismuth.

L'utilisation des colonnes d'extraction décrites dans ces documents est limitée par la cinétique d'échange. La HEPT (hauteur équivalente à un plateau théorique) de ces colonnes est généralement comprise entre 1 et 2 m.

Le document [5] décrit une colonne à garnissage rotatif qui est notamment utilisé pour la mise en contact d'une phase de sels fondus chlorure de potassium-chlorure d'aluminium contenant du plutonium et d'un alliage uranium-aluminium.

Le document [6] décrit des mélangeurs-décanteurs dont la technologie, issue de l'hydrométallurgie, a été spécialement adaptée au domaine de la pyrométallurgie.

L'utilisation de ces mélangeurs-décanteurs est limitée par l'efficacité de la décantation de deux phases de densités voisines. Le volume mort important de ce type d'appareillage nécessite également l'utilisation de grandes quantités de réactifs.

Le document [7] décrit un pyrocontacteur centrifuge permettant de mélanger puis de séparer des sels liquides et des métaux liquides immiscibles. Les liquides sont introduits dans une zone de mélange annulaire et sont vigoureusement mélangés à l'aide de pales verticales fixées à un rotor associé à des déflecteurs. Les liquides sont introduits dans l'appareil à une température de 1000K à 1100K et sont séparés dans le rotor en une phase dense et en une phase légère qui sont évacuées de l'appareil.

Cet appareil est utilisé pour traiter les bains de chlorures fondus issus d'un procédé d'électroraffinage.

L'extracteur centrifuge décrit dans ce document est un appareil performant mais qui a été testé pendant des durées faibles ne dépassant pas quelques centaines d'heures en milieu chlorures fondus. Sa fiabilité n'a donc pas été prouvée sur une durée suffisante. L'utilisation de ces appareils est également limitée par l'apparition de problèmes de corrosion qui altèrent rapidement leur fonctionnement.

Par ailleurs, en dehors du domaine des pyrocontacteurs et de l'industrie nucléaire, les documents [8] et [9] décrivent la séparation de liquides non miscibles notamment dans le cadre de l'extraction du pétrole contenu dans l'eau.

Ces techniques mettent en oeuvre des appareils complexes équipés de tamis métalliques et de systèmes de pompage dans le but de faire une simple séparation physique de deux fluides sans aucune finalité d'extraction sélective de composés dissous.

C'est afin de remédier aux inconvénients présentés par les procédés et dispositifs décrits dans les documents [1] à [7] cités plus haut que le dispositif et le procédé du document [10] ont été développés.

Le document [10] concerne un contacteur à paroi ajourée qui permet la mise en contact de deux phases liquides non miscibles telles qu'une phase de fluorure d'alcalin fondu et une phase d'aluminium liquide sans provoquer leur mélange.

Ainsi, dans cet appareil, les propriétés de tensions interfaciales de l'aluminium fondu permettent un confinement de ce métal au moyen de la paroi ajourée.

Cet appareil peut notamment être mis en oeuvre pour réaliser la mise en contact d'un métal extractant, tel que de l'aluminium, en fusion, avec deux phases de sels fondus, et permet ainsi de réaliser facilement l'extraction et la désextraction d'actinides.

L'existence de la paroi ajourée séparant les deux milieux, limite et ralentit toutefois fortement la vitesse de transfert de matière.

Cette limitation est principalement liée à la diffusion des espèces chimiques au-travers de la paroi ajourée. Dans ces conditions, l'équilibre thermodynamique est généralement atteint après 12h de contact entre les deux phases.

En d'autres termes, le dispositif décrit dans le document [10] présente une cinétique de transfert de matière, notamment une cinétique d'extraction, fortement limitée par les phénomènes de diffusion à travers la paroi ajourée.

Le contacteur à paroi ajourée décrit dans le document [10] est couplé à un chauffage résistif « classique » qui permet de travailler à une température proche de 1200K sous atmosphère à teneur en oxygène et humidité contrôlées. Cette conception autorise un mouvement de liquide par convection de l'ordre d'un mm/min côté sel fondu.

Du côté de l'aluminium, la très bonne conductivité thermique de l'aluminium liquide empêche l'existence d'un gradient de température au sein de ce métal fondu. Ainsi, la phase aluminium fondu a une densité constante en tout point du creuset, ce qui empêche toute existence d'un brassage par convection libre dans cette phase.

Ainsi, la limitation du transfert de matière dans l'aluminium est principalement due à la diffusion des espèces dans le métal liquide qui est un phénomène réputé lent.

Dans le cas d'un chauffage résistif, la vitesse de brassage par convection de l'aluminium est ainsi proche de zéro.

L'une des solutions pour améliorer la cinétique et le brassage des phases consisterait à mettre en oeuvre un brassage de type mécanique de l'aluminium et des sels fondus.

La conception du pyrocontacteur du document [10] ne facilite pas ce type d'implantation.

Le brassage mécanique doit également faire l'objet d'une surveillance particulière au niveau des passages étanches compte tenu des contraintes liées à la haute température.

Enfin, l'option de l'agitation mécanique est rapidement limitée par les effets de paroi qui ralentissent fortement l'écoulement des fluides au niveau des zones géométriquement contraintes comme les fenêtres du contacteur. Ces différentes considérations permettent de conclure à l'inefficacité d'une telle solution.

Par ailleurs, le chauffage et brassage par induction est une technique bien connue.

Du point de vue industriel, l'utilisation d'un four inductif est particulièrement répandue pour le chauffage des métaux.

Dans le domaine du nucléaire, le chauffage par induction a été employé dans le cadre du projet de l'IFR (« *International Fast Reactor* ») [17] en vue de purifier de l'uranium métal. Cette technologie est toujours utilisée à l'INL pour le retraitement de combustibles du réacteur EBRII "*Experimental Breader Reactor II*" [18] dans la partie du procédé appelée "cathod processor" qui vise à évaporer des résidus de chlorures fondus contenus dans de l'uranium métal.

La JAEA (« *Japan Atomic Energy Agency* ») utilise également l'induction en fin de procédé dans des conditions opératoires proches de l'INL.

Dans le cadre du procédé pyrométallurgique, Hayashi et al. [19] ont également développé un système de chauffage à induction destiné à améliorer la propriété de résistance à la corrosion d'un creuset contenant un sel fondu. Ici, la solution consiste à utiliser une technologie proche du creuset froid.

L'induction permet aussi la mise en lévitation d'un métal fondu et évite tout contact avec des parois de creuset. Dans ces conditions, il est possible d'obtenir un métal de haute pureté. Cette propriété a été utilisée à Los Alamos [20] dans le cadre du retraitement du combustible pour obtenir du plutonium de haute pureté.

Par ailleurs, le document [21] décrit un four de fusion de matériaux isolants tels que le verre par induction directe en creuset froid.

Ce four de fusion comprend un creuset refroidi à paroi latérale métallique continue, une sole sectorisée et refroidie, et au moins un inducteur disposé sous la sole qui constitue le seul moyen de chauffage du creuset. Ce document a simplement trait à la fusion d'un verre et ne concerne pas la mise en contact de deux fluides non miscibles. Aucun brassage du verre sous l'effet de l'induction n'est évoqué.

Le document [22] concerne un dispositif électromagnétique de fusion et d'agitation interfaciale d'un système diphasique, comprenant une première phase ou phase inférieure et une deuxième phase ou phase supérieure, immiscibles. Ce dispositif permet notamment l'accélération de processus métallurgique ou pyrochimique.

Plus précisément, ce dispositif comprend :

- un creuset destiné à contenir le système diphasique ;
- des moyens de fusion et d'agitation prévus pour la fusion des première et deuxième phases et l'agitation de l'interface de celles-ci.

Ces moyens de fusion et d'agitation comprennent :

- un inducteur entourant le creuset et
- des moyens d'alimentation de cet inducteur par un courant variable ayant au moins une composante, cette composante étant apte à agiter l'interface des première et deuxième phases.

La première phase peut être un métal ou alliage et la deuxième phase peut être un laitier ou un sel.

Des essais sont réalisés avec une phase métallique à base de zinc et une phase saline fluorée, ou bien avec une phase métallique constituée par un alliage Al-Cu et une phase saline constituée par un mélange de LiF et de $CaF_2$. Ces essais ont permis de constater que grâce à l'agitation interfaciale les éléments réductibles sont entièrement transférés vers la phase métallique.

Dans ce dispositif, les phases en contact sont séparées grâce à leur propriété de non-miscibilité et du fait de leur différence de masses volumiques, densités conduisant à ce que, sous l'effet de la gravité, les phases se séparent en une phase supérieure, par exemple saline, et en une phase inférieure, par exemple métallique.

Comme on l'a vu, la phase métallique est notamment constituée d'un alliage Al/Cu plus dense que l'Al pur.

Cet alliage Al/Cu évite, à terme, la formation d'un milieu diphasique de type émulsion mais l'utilisation d'un alliage Al/Cu n'est pas compatible au niveau de la gestion des flux matières à l'échelle de l'usine.

Les dispositifs utilisant l'induction décrits dans ce qui précède n'ont pas permis l'émergence de systèmes de contacteur liquide/liquide à haute température directement utilisables pour mettre en oeuvre des procédés d'extraction.

Il existe donc un besoin au vu de ce qui précède pour un procédé et pour un dispositif de mise en contact de deux fluides immiscibles, tel qu'un pyrocontacteur, qui soit simple, fiable, sûr et facile à mettre en oeuvre.

Il existe encore un besoin pour un tel procédé et un tel dispositif qui puissent être utilisés notamment avec des métaux et sels fondus avec une grande efficacité et une cinétique optimale.

Il existe ensuite un besoin pour un procédé et un dispositif de mise en contact et en mouvement de fluides non miscibles tout en maîtrisant les accélérations auxquelles sont soumis les fluides et qui ne nécessite qu'un nombre très limité de pièces en mouvement.

Il existe plus précisément un besoin pour un procédé et un dispositif de mise en contact de fluides non miscibles, tel qu'un pyrocontacteur, qui tout en améliorant la cinétique de transfert de matière, du contacteur à paroi ajourée du document [10], conserve par ailleurs tous les avantages avérés apportés par cette technologie de contacteur à paroi ajourée.

Il existe en particulier un besoin pour un procédé et un dispositif de mise en contact de fluides non miscibles utilisant la technologie du contacteur à paroi ajourée du document [10] qui comprenne un dispositif de brassage simple à mettre en oeuvre quelque soit la nature des phases en contact et le domaine de température de travail et qui permette une forte amélioration du renouvellement des phases liquides jusqu'à l'interface située dans la paroi ajourée.

Il serait en outre avantageux que ce dispositif soit téléopérable pour autoriser son exploitation dans des enceintes de confinement nucléaire du type caisson blindé.

Le but de l'invention est de fournir un procédé et un dispositif de mise en contact de deux liquides non miscibles qui répondent entre autres à ces besoins.

Le but de l'invention est aussi de fournir un procédé et un dispositif de mise en contact de deux liquides qui permettent l'utilisation de deux liquides de même masse volumique ou de masses volumiques proches, voisines.

Le but de l'invention est encore de fournir un procédé et un dispositif de mise en contact de deux liquides dans lesquels le chauffage des liquides est réalisé au moyen d'un dispositif de chauffage compact limitant les phénomènes d'échauffement dans un caisson confiné.

Le but de l'invention est en outre de fournir un tel procédé et un tel dispositif qui ne présentent pas les inconvénients, défauts, limitations et désavantages des procédés et dispositifs de l'art antérieur et qui résolvent les problèmes des procédés et dispositifs de l'art antérieur, et notamment les problèmes de cinétique de transfert insuffisante à travers une paroi ajourée, du procédé et du dispositif décrits dans le document [10] (WO-A1-2008/080853) tout en en conservant tous les avantages.

## EXPOSÉ DE L'INVENTION

Ce but et d'autres encore, sont atteints, conformément à l'invention, par un procédé de mise en contact sans mélange d'un premier matériau, constitué par un métal ou par un alliage de plusieurs métaux, à l'état liquide, et d'un deuxième matériau, constitué par un sel ou un mélange de plusieurs sels, à l'état liquide, ledit premier matériau et ledit deuxième matériau à l'état liquide étant immiscibles, ledit premier matériau étant conducteur de l'électricité à l'état solide et à l'état liquide, et ledit deuxième matériau étant conducteur de l'électricité à l'état liquide et éventuellement à l'état solide, dans lequel on réalise les étapes successives suivantes :

a) on place le premier matériau, à l'état solide, dans au moins un premier récipient comprenant une paroi en un matériau solide réfractaire, non conducteur de l'électricité, transparent à un champ magnétique créé par au moins un inducteur, et non réactif vis-à-vis du premier et du deuxième matériaux, ladite paroi comprenant un ou plusieurs orifice(s) traversant(s) ; le premier matériau à l'état liquide étant non mouillant vis-à-vis dudit matériau solide de la paroi ;

b) on met en contact ledit premier récipient avec un volume du deuxième matériau à l'état solide, placé dans au moins un deuxième récipient en un matériau solide réfractaire, transparent à un champ magnétique créé par au moins un inducteur, non conducteur de l'électricité et non réactif vis-à-vis du deuxième matériau ;

c) on soumet le premier et le deuxième récipients à l'action d'un champ électromagnétique créé par au moins un inducteur, moyennant quoi des courants électriques induits sont générés dans le premier matériau à l'état solide et provoquent la fusion du premier matériau ;

d) le premier matériau à l'état liquide se met en mouvement sous l'action de forces de Laplace ;

e) le deuxième matériau à l'état solide commence à fondre sous l'effet d'un flux de chaleur en provenance du premier récipient par conduction et rayonnement;

f) une conductivité ionique apparaît dans le deuxième matériau permettant le développement de courants électriques induits qui accélèrent la fusion du deuxième matériau ;

g) le deuxième matériau à l'état liquide se met en mouvement sous l'action de forces de Laplace ;

h) le premier matériau à l'état liquide étant en contact avec le deuxième matériau à l'état liquide au niveau desdits orifices, on laisse en contact le premier matériau à l'état liquide avec le deuxième matériau à l'état liquide pendant une durée suffisante pour que se produise un échange, transfert de matière entre le premier matériau à l'état liquide et le deuxième matériau à l'état liquide;

i) on retire le premier récipient du volume du deuxième matériau à l'état liquide ;

j) on refroidit le premier récipient jusqu'à ce que le premier matériau revienne à l'état solide.

Par matériau conducteur de l'électricité au sens de l'invention, on entend généralement que ce matériau a une conductivité supérieure à 100 S.m$^{-1}$, de préférence supérieure à 1000 S.m$^{-1}$.

Par matériau transparent à un champ magnétique, on entend généralement qu'il n'existe pas d'interaction entre ce matériau et l'onde électromagnétique créée par l'inducteur, plus précisément que ce matériau présente une perméabilité magnétique maximale de 10$^{-3}$ H.m$^{-1}$.

Avantageusement, le courant parcourant l'inducteur a une intensité de 100 à 3000 A.Tour ou spire, de préférence de 100 à 1000 A.Tour ou spire, et une fréquence de 20 à 400 kHz, par exemple de 200 kHz.

Avantageusement, le courant parcourant l'inducteur a une fréquence qui est choisie de façon à régler l'épaisseur de peau pour le premier et le deuxième matériaux, en fonction de la géométrie du premier et du deuxième récipients et des propriétés de conductivités électriques respectives du premier matériau et du deuxième matériau.

Précisons en effet que seuls les premier et deuxième matériaux doivent être conducteurs, à savoir à l'état solide et à l'état liquide pour le premier matériau tel que l'aluminium, et au minimum à l'état liquide pour le deuxième matériau.

Par épaisseur de peau, on entend généralement l'épaisseur du matériau où sont produits les 2/3 des courants secondaires induits.

Par exemple, la fréquence du courant peut être choisie de telle sorte que l'épaisseur de peau soit égale à la moitié de la valeur du rayon du récipient, creuset contenant le matériau le moins conducteur qui est généralement le ou les sel(s), si ce récipient est un cylindre à section droite circulaire.

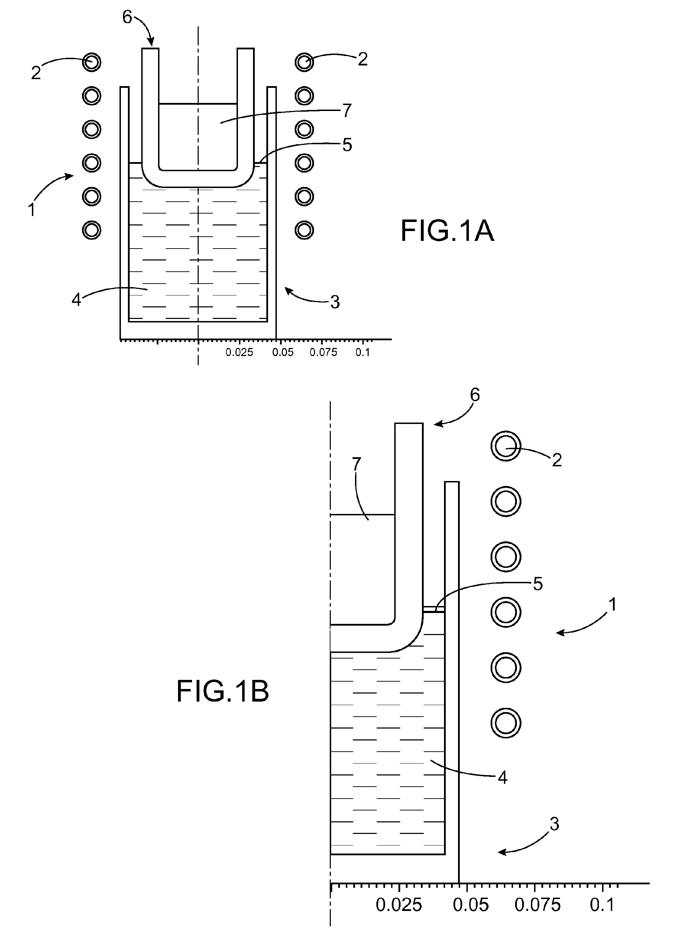

Avantageusement, le deuxième récipient dans lequel est placé le deuxième matériau (matériau 2, sel(s), généralement matériau le moins conducteur) entoure le (s) premier (s) récipient (s) dans lequel est placé le premier matériau (matériau 1, métal ou alliage, généralement matériau le plus conducteur) et le deuxième récipient est plus proche du ou des inducteur(s) que le premier récipient (voir par exemple Figure 1A).

Avantageusement la fréquence d'induction pourra être de 200 kHz dans le cas de la géométrie illustrée sur la figure 1A, dans ces conditions l'épaisseur de peau dans le matériau 1 (métal fondu) sera par exemple de 1mm et l'épaisseur de peau dans le sel fondu sera par exemple de 3 cm.

Avantageusement, dans ces conditions (c'est à dire avec une fréquence de 200 Hz et la géométrie illustrée sur la Figure 1A), la puissance injectée est répartie à environ 50% entre les deux matériaux, par exemple la puissance injectée au matériau 2 (sel fondu) est de 51% et la puissance injectée au matériau 1 (métal fondu) est de 49%.

Avantageusement, le champ électromagnétique créé par l'inducteur génère un flux d'induction magnétique compris entre 10$^{-6}$ et 10$^{-3}$ Wb.

Avantageusement, le champ électromagnétique créé par l'inducteur peut être un champ glissant.

Un tel champ glissant permet d'améliorer l'efficacité du chauffage et du brassage.

Afin de créer un tel champ glissant, plusieurs inducteurs indépendants sont prévus, chaque inducteur étant constitué par une seule spire parcourue par un courant.

Entre chaque inducteur la partie réelle du courant est déphasée de 90° ou $\pi/2$.

Par matériau solide réfractaire au sens de l'invention, on entend généralement que ce matériau peur résister sans subir de dégradation des températures pouvant atteindre 1300K.

Avantageusement, le matériau solide réfractaire qui constitue la paroi du premier récipient est choisi parmi le nitrure de bore et l'alumine.

Avantageusement, la masse volumique du premier matériau à l'état liquide et la masse volumique du deuxième matériau à l'état liquide sont identiques ou proches.

C'est là un des avantages du procédé selon l'invention que de permettre la gestion de telles phases ayant des masses volumiques identiques ou proches.

Par masses volumiques proches, on entend généralement que la masse volumique du premier matériau à l'état liquide et la masse volumique du deuxième matériau à l'état liquide ne diffèrent pas de plus de 10%, de préférence pas de plus de 5%, de préférence encore pas de plus de 1%.

Le premier matériau à l'état liquide est non mouillant vis-à-vis du matériau de la paroi du premier récipient, ce qui signifie que, généralement, son angle de contact $\theta$ avec ladite paroi est supérieur à 90°, de préférence il est compris entre 120° et 180°.

Le deuxième matériau à l'état liquide peut être mouillant ou non mouillant, mais il doit avoir de préférence un caractère plutôt mouillant vis-à-vis du matériau de la paroi séparative, c'est-à-dire de la paroi du premier récipient.

Le procédé selon l'invention comprend une suite spécifique d'étapes spécifiques qui n'a jamais été décrite, ni suggérée dans l'art antérieur tel que représenté notamment par les documents cités plus haut.

Le procédé selon l'invention est simple, fiable, facile à mettre en oeuvre. Il répond aux besoins et exigences énumérés ci-dessus et apporte une solution aux problèmes de l'art antérieur cités plus haut et notamment aux problèmes présentés par le procédé et le dispositif décrits dans le document [10] (WO-A1-2008/080853).

De manière simplifiée, on peut dire que dans le procédé selon l'invention on associe, de manière inattendue, d'une part la mise en contact d'un premier matériau à l'état liquide avec un deuxième matériau à l'état liquide, séparés par une paroi comprenant un ou plusieurs orifice(s) traversant(s), et d'autre part un chauffage par induction utilisant le premier matériau comme suscepteur.

En d'autres termes, le procédé selon l'invention se différencie du procédé qui est décrit dans le document [10] en ce qu'il met en oeuvre le contacteur liquide/liquide à paroi ajourée de ce document en l'associant à un chauffage par induction utilisant le premier matériau comme suscepteur, ce chauffage par induction étant rendu possible grâce à l'utilisation d'un matériau réfractaire transparent aux ondes électromagnétiques générées par un inducteur pour constituer aussi bien le premier récipient ou panier ajouré que le deuxième récipient ou creuset.

Par rapport au document [10], le remplacement du chauffage résistif par un système inductif permet une forte amélioration des performances du contacteur liquide/liquide. En effet, le gain obtenu grâce au procédé selon l'invention sur la vitesse de brassage du deuxième matériau est généralement d'un ordre de grandeur (d'un facteur 10) par rapport à la vitesse de brassage provoquée par la convection libre dans le deuxième matériau fondu en mettant en oeuvre un chauffage résistif classique.

On obtient par exemple, avec le procédé selon l'invention, une vitesse de brassage du deuxième matériau (sels fondus) de 3 cm/s alors qu'une vitesse de brassage du deuxième matériau de seulement 2 mm/s est obtenue avec un chauffage résistif classique.

Du côté du premier matériau (métal fondu) la vitesse de brassage progresse de plusieurs ordres de grandeur puisque les valeurs attendues sont proches de la dizaine de cm/s alors que le mode de chauffage résistif mis en oeuvre dans l'art antérieur tel que représenté par le document [10] ne permettait pas la mise en place d'un brassage convectif du premier matériau.

La mise en place du brassage par induction permet donc de diminuer le temps de contact d'un facteur 10 à 100.

Ce gain de temps permet d'atteindre un état d'équilibre en une durée généralement inférieure à 1 heure, par exemple en seulement 10 minutes, au lieu de 24 heures [10].

L'utilisation pour constituer aussi bien le premier récipient que le deuxième récipient d'un matériau transparent au champ électromagnétique généré par l'inducteur permet d'utiliser le premier matériau, c'est à dire le métal ou l'alliage de métaux comme matériau suscepteur.

Les deux récipients peuvent être en un même matériau transparent au champ électromagnétique ou en des matériaux différents tous deux transparents au champ électromagnétique généré par l'inducteur.

Un tel matériau ou de tels matériaux, utilisé(s) pour constituer les récipients, qui possède(nt) une bonne transparence aux lignes de champ, interagit(interagissent) peu, de ce fait, avec le chauffage par induction, et la puissance délivrée par l'inducteur est donc principalement utilisée pour chauffer le premier matériau à l'état solide ou liquide et le deuxième matériau à l'état liquide.

On peut dire que le procédé selon l'invention consiste, de manière inattendue, à associer la technologie du contacteur liquide/liquide faisant l'objet du document [10] (WO-A1-2008/080853) et la magnétohydrodynamique en lieu et place d'un chauffage résistif classique.

Cette association permet d'améliorer fortement l'efficacité du système décrit dans le document [10] et d'augmenter la productivité d'un tel système.

Le procédé selon l'invention met à profit les lois de la magnétohydrodynamique pour assurer simultanément un brassage et un chauffage électromagnétique des matériaux fondus.

Le procédé selon l'invention, permet non seulement un chauffage mais aussi un brassage du premier et du deuxième matériaux et repose sur une double utilisation des propriétés de l'électromagnétisme. En effet, les lois de conservation de l'énergie permettent l'association d'un effet thermique (chauffage) avec un aspect mécanique des fluides (brassage).

Le procédé selon l'invention améliore significativement la cinétique de transfert de matière au-travers des parois ajourées du contacteur liquide/liquide décrit dans le document [10] en imposant un renouvellement forcé des milieux liquides à l'interface entre le premier matériau à l'état liquide (par exemple de l'aluminium fondu) et le deuxième matériau à l'état liquide (les sels fondus).

Ce renouvellement à l'intérieur des orifices traversants ou fenêtres du premier récipient est possible grâce à la mise en place d'un brassage électromagnétique dans les premier et deuxième matériaux à l'état liquide tels que des métaux et sels fondus.

Sans vouloir être lié par aucune théorie, le procédé selon l'invention, de manière surprenante, utilise les propriétés électromagnétiques du premier matériau pour l'employer également comme suscepteur.

En effet, selon une caractéristique fondamentale du procédé selon l'invention, le rôle de suscepteur (par suscepteur on entend une partie, pièce ou élément chauffé(e) par les courants induits) n'est pas joué par une paroi du premier récipient ou creuset comme cela est généralement le cas dans les procédés mettant en oeuvre un chauffage par induction.

Dans le procédé selon l'invention, le rôle de suscepteur est joué, de manière étonnante, par le premier matériau qui est un métal tel que l'aluminium dans lequel sont générés des courants induits. Ce rôle de suscepteur est ensuite également joué par le deuxième matériau constitué par des sels lorsque celui-ci a suffisamment fondu et est suffisamment conducteur pour que des courants induits y soient créés.

L'association dans le cadre du procédé selon l'invention, du système à paroi ajourée du document [10] (WO-A1-2008/080853) réalisé en un matériau spécifique, notamment réfractaire et transparent aux ondes électromagnétiques émises par un inducteur, avec un chauffage par induction utilisant le premier matériau en tant que suscepteur, peut être qualifiée d'association synergique qui présente toute une série d'effets et avantages inattendus, cette association permet notamment :

- de chauffer et de fondre sans contact les premier et deuxième matériaux solides même s'ils présentent une température de fusion élevée, par exemple voisine de 1100K, comme c'est le cas des fluorures alcalins;
- le chauffage par induction permet de fondre les premier et deuxième matériaux à savoir le métal par exemple l'aluminium, et les sels malgré des conductivités électriques éloignées, par exemple éloignées de trois ordres de grandeur ;
- de réaliser un brassage de différentes phases : à savoir la phase constituée par le premier matériau à l'état liquide et la phase constituée par le deuxième matériau à l'état liquide ;
- d'accélérer la cinétique de transfert de matière, par exemple d'extraction ;

En d'autres termes, grâce à l'association précitée dans le cadre du procédé selon l'invention :

- on crée un mouvement et un renouvellement des interfaces liquides premier matériau à l'état liquide (métal tel qu'aluminium fondu) / deuxième matériau à l'état liquide (sel(s) fondu(s)) jusque dans les fenêtres du contacteur et malgré les effets de paroi ;

- on fait jouer au premier matériau tel que l'aluminium, et de manière étonnante et avantageuse, un double rôle : à savoir d'une part le rôle d'extractant et d'autre part le rôle de source de chaleur conséquence de son rôle de suscepteur ;

- on réalise un brassage électromagnétique dans des métaux présentant une conductivité thermique élevée comme l'aluminium. Dans le cas d'un chauffage résistif, la très bonne conductivité thermique de l'aluminium empêche l'apparition de tout gradient de température. Il ne peut donc y avoir de variation de masse volumique au sein du métal fondu. Les mouvements d'aluminium liquide par convection sont donc impossibles. Le procédé selon l'invention assure donc de manière surprenante le brassage de métaux à conductivité élevée qui était jusqu'à présent impossible avec les procédés faisant appel à un chauffage résistif ;

- on réalise un brassage électromagnétique du sel, une fois fondu, et on améliore ainsi de manière très importante, par exemple d'un facteur 10, la vitesse du mouvement par rapport à la convection libre ;

- on obtient une vitesse de montée en température beaucoup plus élevée, par exemple 10 fois plus rapide que lorsque l'on met en oeuvre un chauffage résistif ;

- de par le système inductif, on peut travailler dans un domaine de température pouvant aller au-delà de 1300K sans être contraint par la nature de la résistance de chauffage d'un système résistif classique ;

- on met en oeuvre un chauffage inductif à distance, qui peut facilement être piloté en faisant varier la puissance délivrée par le générateur,

- la source de chaleur est utilisée de manière optimale car cette source de chaleur est constituée par le premier matériau tel que l'aluminium, jouant le rôle de suscepteur, placé généralement au centre du dispositif, et non par les parois du premier ou du deuxième récipient ;

- on contrôle facilement la zone de chauffe et les vitesses de brassage en fonction du choix de la fréquence et du courant de fonctionnement ;

- la possibilité de mettre deux phases en mouvement de part et d'autre d'une paroi ajourée permet d'envisager un système d'extraction / désextraction en continu par mise en contact d'un métal tel que l'aluminium, avec deux types de phase possédant les caractéristiques appropriées.

Les courants électriques induits générés dans le premier matériau à l'état solide provoquent la fusion du premier matériau, et la chaleur ainsi produite par la fusion du premier matériau tel que de l'aluminium permet dans un deuxième temps d'initier la fusion du deuxième matériau, constitué par des sels, en contact avec le premier matériau en fusion.

Le deuxième matériau, partiellement fondu, présente alors généralement une conductivité ionique suffisante, par exemple supérieure à 100 S.m$^{-1}$ pour que ce deuxième matériau soit directement chauffé par couplage du champ magnétique et passe totalement à l'état liquide.

Outre le chauffage du premier et du deuxième matériaux, le champ magnétique induit des forces de Laplace qui sont à l'origine de la convection forcée au sein des deux matériaux à l'état liquide.

Le procédé selon l'invention peut être mis en oeuvre facilement quelles que soient la nature et la température des premier et deuxième matériaux qui sont respectivement des métaux ou alliages et des sels.

Le procédé selon l'invention peut être réalisé en une relativement courte durée, généralement inférieure à 1 heure, par exemple en seulement 10 minutes, car la mise en place du brassage permet d'atteindre l'équilibre thermodynamique en une faible durée.

En particulier, la durée suffisante de la mise en contact de l'étape h) peut être facilement déterminée par l'homme du métier dans ce domaine de la technique et est généralement de 2 à 10 minutes, et peut atteindre par exemple jusqu'à 1 heure.

Le procédé selon l'invention peut être réalisé aussi bien selon un mode de fonctionnement discontinu que selon un mode de fonctionnement continu. En effet, le principe de la séparation des phases liquides associé à une mise en mouvement des fluides par brassage électromagnétique permet d'envisager un fonctionnement du type « usine », en mode continu. De préférence, selon l'invention, la tension interfaciale du point triple : premier matériau à l'état liquide / deuxième matériau à l'état liquide / matériau solide de la paroi du premier récipient est élevée.

Par exemple, la tension interfaciale du point triple : premier matériau à l'état liquide / deuxième matériau à l'état liquide / matériau solide de la paroi du premier récipient est supérieure à 0,3 N.m$^{-1}$, de préférence supérieure à 0,6 N.m$^{-1}$

En outre, avantageusement, le premier matériau à l'état liquide présente une tension superficielle supérieure à 0,3 N.m$^{-1}$, de préférence supérieure à 0,8 N.m$^{-1}$.

Une telle tension superficielle élevée permet d'assurer le maintien du premier matériau à l'état liquide dans les récipients lors de leurs déplacements hors du deuxième matériau et d'éviter toute perte de liquide par écoulement capillaire hors des récipients.

Il est ainsi possible de travailler avec des ouvertures, orifices traversants, dont les dimensions caractéristiques sont de l'ordre du millimètre.

Avantageusement, ledit métal ou ledit alliage de plusieurs métaux est choisi parmi les métaux et alliages à caractère réducteur comme l'aluminium et ses alliages.

Avantageusement, le ou les sel(s) peut (peuvent) être choisis parmi les chlorures de métaux alcalins, les chlorures de métaux alcalino-terreux, et les chlorures d'aluminium comme par exemple LiCl, $AlCl_3$ ; et les fluorures de métaux alcalins, les fluorures de métaux alcalino-terreux, et les fluorures d'aluminium comme par exemple LiF, et $AlF_3$.

On pourra mettre en oeuvre par exemple un mélange $LiCl/AlCl_3$ ou un mélange $LiF/AlF_3$.

A l'issue de l'étape finale j) du procédé selon l'invention, on peut répéter les étapes b) à j), c'est-à-dire que l'on peut mettre le premier récipient en contact avec un volume d'un troisième matériau, constitué par un sel ou un mélange de plusieurs sels différent du deuxième matériau.

Le transfert (échange) de matière réalisé au cours de l'étape h) peut être toute opération de transfert de matière pouvant intervenir entre deux matériaux à l'état liquide, de préférence ledit transfert de matière entre le premier et le deuxième matériaux à l'état liquide est une extraction liquide/liquide au cours de laquelle l'un des constituants du deuxième matériau à l'état liquide passe dans le premier matériau à l'état liquide et/ou l'un des constituants du premier matériau à l'état liquide passe dans le deuxième matériau à l'état liquide.

En particulier, lorsqu'une extraction liquide/liquide est réalisée, ledit premier matériau peut être de l'aluminium ou un alliage d'aluminium et le deuxième matériau peut comprendre des sels de fluorures de métaux alcalins ou alcalino-terreux contenant du fluorure d'aluminium et dans lesquels se trouvent dissous un ou plusieurs fluorure(s) d'actinides et un ou plusieurs fluorure(s) de lanthanides ; et lors de l'étape h), lesdits fluorures d'actinides sont réduits chimiquement par contact avec l'aluminium ou l'alliage d'aluminium fondu en lesdits actinides (sous forme de métaux) qui passent par conséquent en solution dans le premier matériau à l'état liquide, tandis que les fluorures de lanthanides (non réactifs) restent dans le deuxième matériau à l'état liquide.

A l'issue de l'étape j), on peut alors répéter les étapes b) à j) en mettant en contact ledit ou lesdits premier(s) récipient(s) contenant l'aluminium ou l'alliage d'aluminium et les actinides (métaux) avec un volume d'un troisième matériau constitué par un ou plusieurs chlorures de métaux alcalins ou alcalino-terreux contenant du chlorure d'aluminium, moyennant quoi les actinides sont oxydés chimiquement par contact avec lesdits chlorures fondus en chlorures d'actinides qui passent dans le troisième matériau à l'état liquide (sous la forme oxydée de chlorures) ; et la réduction du chlorure d'aluminium permet de régénérer, récupérer, l'aluminium métal qui peut éventuellement être réutilisé pour un nouveau cycle d'extraction/désextraction.

Les étapes b) à g) du procédé de l'invention sont réalisées de préférence sous un vide primaire de $10^{-2}$ à $10^{-1}$ mbar absolus lors de la mise en contact des deux liquides ce qui garantit un contact « intime » entre les deux matériaux, notamment à l'état liquide, c'est-à-dire que ladite poche de gaz pouvant s'intercaler entre les deux phases est ainsi éliminée.

Puis l'étape h) du procédé selon l'invention est réalisée, de préférence sous une atmosphère de gaz inerte tel que l'argon, en évitant de préférence la présence d'humidité et d'oxygène, de préférence à une pression proche de la pression atmosphérique, afin notamment d'éviter l'évaporation de sel fondu.

L'invention concerne, en outre, un dispositif pour la mise en oeuvre du procédé selon l'invention, tel qu'il a été décrit plus haut, ce dispositif comprend :

- un ou plusieurs premier(s) récipient(s) destiné(s) à recevoir un premier matériau à l'état solide ou liquide et comprenant des parois en un matériau solide réfractaire, non conducteur de l'électricité, transparent à un champ magnétique créé par au moins un inducteur, et non réactif vis-à-vis du premier et du deuxième matériaux, lesdites parois comprenant un ou plusieurs orifice(s) traversant(s) ; le premier matériau à l'état liquide étant non mouillant vis-à-vis dudit matériau solide des parois ;

- un deuxième récipient destiné à recevoir un volume d'un deuxième matériau à l'état solide ou liquide, et comprenant des parois en un matériau solide réfractaire, transparent à un champ magnétique créé par au moins un inducteur, non conducteur de l'électricité, et non réactif vis-à-vis du deuxième matériau ;
- des moyens pour supporter le ou les premier(s) récipient(s) contenant le premier matériau afin de les mettre en contact avec ledit volume du deuxième matériau et de les retirer, ensuite, du volume du deuxième matériau ;
- des moyens, constitués par au moins un inducteur, situés à l'extérieur des parois du deuxième récipient, pour soumettre le(s) premier(s) récipient(s) et le deuxième récipient à l'action d'un champ électromagnétique.

Précisons que par matériau peu conducteur de l'électricité, on entend généralement un matériau ayant une conductivité électrique $< 10^{-3}$ $S.m^{-1}$.

Le dispositif selon l'invention possède tous les avantages, effets, liés à la mise en oeuvre du procédé selon l'invention et qui ont été mentionnés plus haut.

Il est notamment simple, fiable, et il présente un minimum de pièces en mouvements pour un maximum d'efficacité. Sa consommation d'énergie est minimale.

Il peut être conçu pour être facilement téléopérable afin d'être mis en oeuvre dans les enceintes de confinement nucléaires, par exemple du type caisson blindé.

Le dispositif selon l'invention peut être conçu aussi bien pour un mode de fonctionnement du type discontinu, particulièrement bien adapté à de faibles quantités de matière, par exemple 100 à 200 g de métal fondu et de sels fondus, que pour un mode de fonctionnement du type contenu pour traiter des quantités plus importantes de matériaux.

Le fonctionnement du dispositif en continu nécessite de réaliser certaines adaptations de celui-ci qui sont à la portée de l'homme du métier.

Avantageusement, le ou lesdits premier(s) récipient(s) et le deuxième récipient sont en un matériau choisi parmi l'alumine, et le nitrure de bore.

Un matériau préféré est le nitrure de bore.

En effet, ce matériau est chimiquement inerte vis-à-vis des sels fondus et des métaux fondus tels que l'aluminium, en outre le nitrure de bore mouille peu l'aluminium.

Il possède également une perméabilité magnétique de $4.\pi.10^{-7}$ H.m$^{-1}$.qui procure une bonne transparence vis-à-vis des lignes de champ.

Avantageusement, lesdits orifices sont tels que détaillés dans le document [10] et ont une forme en section droite choisie parmi les cercles ; les polygones tels que les carrés, les rectangles, en particulier les rectangles dont le rapport longueur/largeur est élevé.

Une forme préférée pour lesdits orifices, notamment dans le cas où les premiers récipients sont des récipients cylindriques est celle de fentes pratiquées dans le fond desdits récipients et qui se prolongent le long des parois latérales desdits récipients.

Avantageusement, le(s)dit(s) premier(s) récipient(s) est(sont) un(des) cylindre(s) à section droite circulaire comportant des parois latérales et une paroi de base ou fond et de préférence la géométrie du fond du ou desdits premier(s) récipient(s) est arrondie afin d'éviter la présence de volumes morts autorisant une diffusion du deuxième liquide sous le premier liquide, en d'autres termes afin de limiter l'accumulation éventuelle du deuxième liquide.

Ou bien le(s)dit(s) premier(s) récipient(s) a(ont) une forme annulaire et de préférence la géométrie du fond dudit ou desdits premier(s) récipient(s) est arrondie.

Avantageusement, le deuxième récipient entoure le(s) premier(s) récipient(s) et le deuxième récipient est plus proche du ou des inducteur(s) que le(s) premier(s) récipient(s).

Avantageusement, le deuxième récipient peut être un cylindre à section droite circulaire comportant des parois latérales et une paroi de base ou fond.

Avantageusement, le dispositif comprend un seul premier récipient, un seul deuxième récipient et au moins un inducteur qui sont symétriques par rapport à un même axe central vertical.

En d'autres termes, le dispositif possède une configuration axisymétrique.

Le dispositif selon l'invention, peut ainsi comprendre un premier récipient cylindrique ou annulaire et un deuxième récipient cylindrique, le premier récipient et le deuxième récipient (ou plus exactement les parois latérales des deux récipients) étant concentriques et leurs axes principaux étant confondus.

L'inducteur est alors de préférence constitué par une ou des spire(s) circulaire(s) entourant la paroi latérale du deuxième récipient et concentrique(s) à celle-ci, l'axe principal de cette (ces) spire(s) étant confondu avec les axes principaux du premier et du deuxième récipients cylindriques.

Une telle géométrie du dispositif ou pyrocontacteur selon l'invention en deux récipients ou creusets concentriques permet de plonger le métal ou l'alliage dans le sel ou les sels.

Cette conception est intéressante du point de vue magnétique puisqu'elle permet ainsi de profiter de la pénétration de lignes de champ dans les deux milieux pour avoir une meilleure répartition de la puissance injectée.

Avantageusement, lesdits moyens pour supporter le(s) dit(s) premier(s) récipient(s), les immerger dans ledit volume du deuxième liquide, et les retirer dudit volume de deuxième liquide peuvent comprendre une tige verticale à l'extrémité inférieure de laquelle est fixé un élément supportant le(s) premier(s) récipient(s).

L'extrémité supérieure de la tige verticale se trouve de préférence dans une zone éloignée soumise à une faible action du champ électromagnétique afin d'en permettre la manipulation,

Avantageusement, ledit élément supportant le(s) premier(s) récipient(s) a la forme d'un carrousel ou barillet circulaire, comprenant un axe central situé dans le prolongement de ladite tige verticale, plusieurs premiers récipients étant disposés selon un cercle concentrique à l'axe central dudit carrousel ou barillet.

Avantageusement, le ou lesdits premier(s) récipient(s) est (sont) fixé(s) à l'élément support de récipient par une (des) clavette(s).

Avantageusement, ledit élément support des premiers récipients peut comporter en son centre une pièce de préférence de forme cylindrique faisant saillie vers le bas au-delà de la base desdits premiers récipients et permettant de maîtriser la profondeur d'immersion, de limiter le volume mort dans le récipient contenant le deuxième liquide.

Avantageusement, l'inducteur est constitué par une bobine à induction dont les spires sont placées au voisinage des parois du deuxième récipient et notamment de ses parois latérales lorsque celui-ci est cylindrique.

Avantageusement, l'inducteur est refroidi, par exemple à l'eau.

On peut ainsi obtenir un dispositif très compact car le refroidissement de l'inducteur, par exemple à l'eau, permet de limiter l'épaisseur des isolants thermiques, prévus autour des parois du deuxième récipient.

Le refroidissement de l'inducteur permet en outre de limiter les contraintes thermiques imposées par un fonctionnement en caisson blindé.

L'invention va maintenant être décrite dans la description détaillée qui suit, notamment en relation avec des modes de réalisation particuliers, en référence aux dessins joints, dans lesquels :

## BRÈVE DESCRIPTION DES DESSINS

- La Figure 1A est une vue latérale en coupe schématique d'un modèle d'un dispositif selon l'invention qui a été utilisé pour la modélisation du dispositif selon l'invention ;
- La Figure 1B est une vue latérale en coupe schématique d'un modèle d'un dispositif selon l'invention utilisé pour la modélisation axisymétrique du dispositif selon l'invention ;
- La Figure 2 est une vue latérale en coupe d'un mode de réalisation d'un panier ajouré du dispositif selon l'invention ;
- Les Figures 3A et 3B sont des vues latérales en coupe d'un autre mode de réalisation d'un panier ajouré du dispositif selon l'invention ;
- la Figure 4 est une vue latérale en coupe schématique qui représente l'angle de contact $\theta$ du point "triple" défini entre le premier liquide (milieu 1), l'atmosphère gazeuse régnant dans le four tel que de l'argon et la paroi solide d'un des paniers ajourés au niveau d'une des fentes de ce panier ;
- La Figure 5 est une vue latérale en coupe schématique qui représente l'angle de contact $\theta'$ au point triple défini entre le premier liquide (milieu 1), le deuxième liquide (milieu 2) et la paroi solide d'un des paniers ajourés au niveau d'une des fentes de ce panier ;
- La Figure 6 est un vue latérale en coupe d'un mode de réalisation du dispositif selon l'invention tel qu'un pyrocontacteur ;
- La Figure 7 est une vue latérale en coupe d'un autre mode de réalisation du dispositif selon l'invention tel qu'un pyrocontacteur ;
- La Figure 8 est une vue du récipient, panier ajouré du dispositif de la Figure 7 ;
- La Figure 9 est une vue en coupe verticale selon l'axe AA du récipient, panier ajouré de la Figure 8 ;
- La Figure 10 est une vue en perspective tridimensionnelle du récipient, panier des Figures 8 et 9 ;
- La Figure 11 est une vue latérale en coupe d'encore un autre mode de réalisation du dispositif ajouré selon l'invention tel qu'un pyrocontacteur, comprenant des paniers ajourés supportés par un barillet ou carrousel et immergés dans des sels fondus;
- La Figure 12 est une vue de dessus du barillet, carrousel, du dispositif de la Figure 11 équipé de six paniers ajourés ;
- La Figure 13 est une vue en perspective du barillet, carrousel, du dispositif de la Figure 11 équipé de six paniers ajourés avec des ouvertures de géométries différentes ;
- La Figure 14 est une vue latérale en coupe d'un dispositif, tel qu'un pyrocontacteur selon l'invention qui montre la forme des lignes du champ magnétique généré par l'inducteur.
- La Figure 15 présente les résultats obtenus dans l'exemple 1, lors de modélisations axisymétriques d'un dispositif selon l'invention réalisées avec le modèle de la Figure 1B. Cette figure montre la modélisation des lignes de champ.
- La Figure 16 est une photographie qui montre le brassage du sel fondu dans un dispositif selon l'invention lors des essais réalisés dans l'exemple 2.
- La Figure 17 est un schéma qui montre le mouvement de la surface du sel fondu photographié sur la Figure 16, en 1 seconde.

La distance ainsi parcourue est de l'ordre du cm.

## EXPOSÉ DÉTAILLÉ DE MODES DE RÉALISATION PARTICULIERS

Dans les figures, un même signe de référence désigne généralement le même élément.

Les Figures 1A et 1B illustrent de manière schématique le principe du procédé selon l'invention et un dispositif pour sa mise en oeuvre.

Le dispositif représenté sur les Figures 1A et 1B comprend tout d'abord un inducteur (1).

Sur les Figures 1A et 1B, cet inducteur (1) est constitué par une bobine à induction comprenant un certain nombre de spires (2), cet inducteur étant relié à un générateur (non représenté).

L'inducteur peut comporter de 1 à 12 spires (2).

Ainsi, à titre d'exemple, l'inducteur représenté sur les Figures 1A et 1B comporte 6 spires, le nombre, la taille, et la forme des spires ainsi que l'intensité et la fréquence du courant alternatif du courant parcourant ces spires peuvent

**EP 2 734 278 B1**

être facilement déterminés par l'homme du métier en fonction notamment de la forme des lignes de champ magnétique et de l'intensité du champ magnétique souhaitée qui peut aller de $10^{-6}$ à $10^{-3}$ Wb , ainsi que du volume des creusets et des métaux et sels mis en oeuvre.

A titre d'exemple, l'intensité du courant parcourant les spires peut aller de 100 à 3000 A. Tour ou spire et sa fréquence peut aller de 20 à 400 kHz.

Le dispositif représenté sur les Figures 1A et 1B comprend en outre un récipient, creuset (3), qui est placé à l'intérieur dudit inducteur (1).

Ce récipient, creuset (3), est destiné à recevoir un deuxième matériau (4), constitué par un sel ou un mélange de plusieurs sels. Ces sels peuvent être notamment des chlorures ou des fluorures fondus, par exemple du fluorure de Lithium LiF.

Ce creuset (3) est généralement en un matériau non conducteur de l'électricité, transparent aux ondes électromagnétiques émises par l'inducteur (1), non réactif vis-à-vis du deuxième matériau notamment vis-à-vis du deuxième matériau à l'état liquide, et réfractaire.

Par réfractaire, on entend que ce matériau peut être mis en contact avec le sel ou les mélanges de sels à l'état fondu à haute température sans subir de dégradations.

Par exemple, ce creuset (3) peut être en un matériau qui peut résister à des températures supérieures à 800K, et pouvant aller jusqu'à 1200K.

Ce creuset peut être par exemple en nitrure de bore, par exemple en nitrure de bore dit de « *grade HP ou HIP* », ou en alumine.

Le deuxième matériau (4), à l'état liquide, à savoir le ou les sel(s) fondu(s) s'élève généralement jusqu'à un niveau (5) représenté sur les Figures 1A et 1B, dans le creuset. Sur les Figures 1A et 1B, le creuset (3) a une forme de cylindre droit dont la paroi latérale est entourée par l'inducteur et est concentrique aux spires de celui-ci.

Le dispositif selon l'invention comprend selon la représentation schématique des Figures 1A et 1B, un ou plusieurs panier(s), récipient(s), creuset(s) ajouré(s), perforés (6) (sur les Figures 1A et 1B, les perforations n'ont pas été représentées) qui contient (contiennent) le premier matériau (7) constitué par un métal ou plusieurs métaux, ce premier matériau lorsqu'il est à l'état liquide rentre en contact avec le deuxième matériau (4) également à l'état liquide contenu dans le creuset.

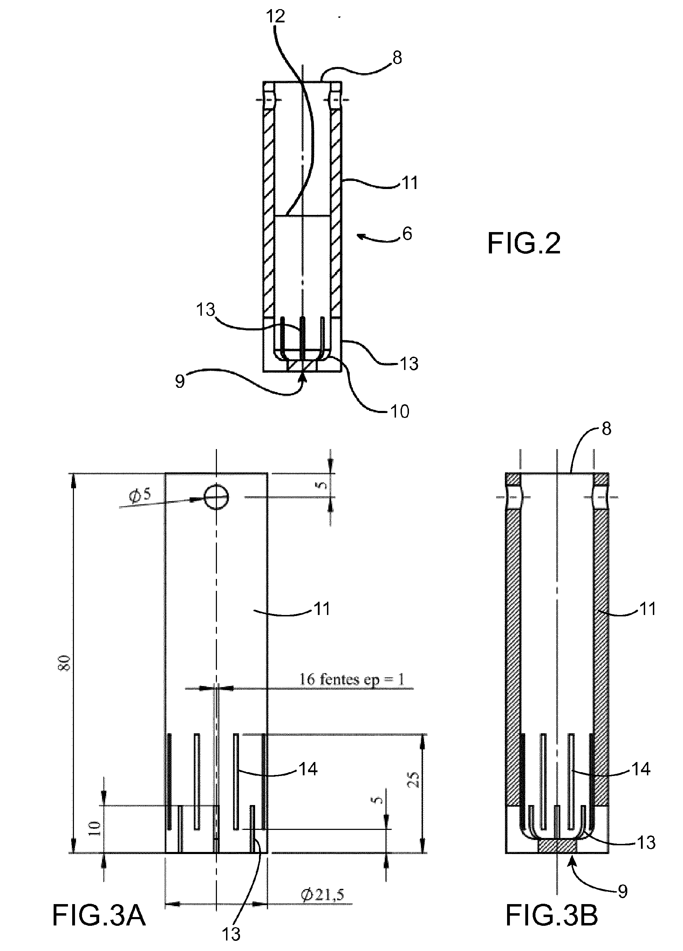

Le panier, creuset ajouré (6), comme cela est montré sur la Figure 2, peut avoir une forme généralement cylindrique, généralement à section droite circulaire, avec un sommet ouvert (8), et leur paroi inférieure ou fond (9) est pourvue de préférence d'un usinage arrondi intérieur (10) qui évite tout volume mort, et par conséquent l'accumulation du deuxième liquide.

En d'autres termes, le raccordement entre les parois latérales (11) du panier (6) et le fond (9) de celui-ci se fait par l'intermédiaire d'une partie de paroi arrondie (10).

Les paniers ajourés peuvent cependant aussi être fermés dans leur partie haute afin d'éviter toute contamination du liquide qui s'y trouve contenu jusqu'à un niveau (12), tel qu'un métal fondu, par les vapeurs et les condensats provenant de la deuxième phase liquide de sels fondus contenue dans le creuset « inférieur ».

La fermeture du ou des panier(s) peut également être réalisée par solidification, en partie supérieure, du premier matériau à l'état liquide contenu dans le panier.

La paroi et le fond des paniers sont, conformément à l'invention, constitués d'un matériau inerte et non réactif vis-à-vis des deux matériaux, en particulier des deux matériaux à l'état liquide.

Ce matériau qui constitue les paniers est en outre, conformément à l'invention, réfractaire, non conducteur de l'électricité, et transparent aux ondes électromagnétiques émises par l'inducteur (1).

Par réfractaire, on entend que ce matériau peut être mis en contact aussi bien avec le métal ou le mélange de métaux, qu'avec le sel ou les mélanges de sels à l'état fondu à hautes températures sans subir de dégradations.

Par exemple, le(s) panier(s) (6) peut (peuvent) être en un matériau qui peut résister à des températures supérieures à 1000K et pouvant aller jusqu'à 1500K.

Le panier (6) peut être par exemple en nitrure de bore, par exemple en nitrure de bore dit de « *grade HP* » (« *High Pressure* » en langue anglaise) ou de « *grade HIP* » (« *High isostatic Pressed* »), ou en alumine.

La condition de faible mouillabilité du matériau qui constitue les paniers par le premier matériau à l'état liquide 1 (contenu), exprimée par un angle $\theta$ supérieur à 90°, doit bien sûr être respectée.

Conformément à l'invention (Figure 2), les parois (y compris le fond) du panier sont pourvues d'orifices, ouvertures (13), au niveau desquels se produit le contact, sans mélange, entre la première phase liquide contenue à l'intérieur des paniers, perforés, percés, ajourés et la deuxième phase liquide qui se trouve à l'extérieur de ces paniers dans le creuset.

Le nombre, la position, la géométrie et la taille des ouvertures (13) du ou des panier(s) peuvent être modifiés pour permettre notamment un ajustement de la surface de contact entre les deux milieux liquides. Par exemple, ces modifications peuvent améliorer la cinétique d'échange d'un procédé d'extraction liquide/liquide. D'autres modifications géométriques peuvent être apportées pour limiter la rétention des liquides dans les paniers ajourés, au niveau de leurs ouvertures, lors des opérations de changement de milieu lors des étapes d'extraction et de désextraction.

Dans le cas notamment des paniers cylindriques, les ouvertures peuvent avoir, en section, la forme de cercles, de carrés, de polygones tels que des rectangles, de préférence de rectangles allongés c'est-à-dire de fentes ; ces ouvertures peuvent être prévues aussi bien sur les parois latérales que sur les fonds des récipients tels que des cylindres.

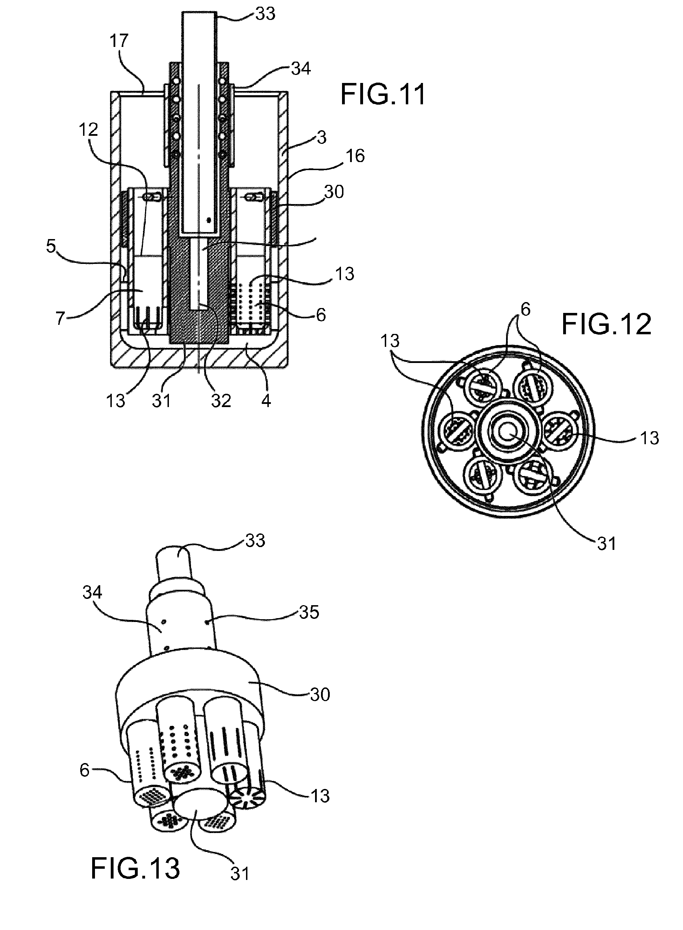

Diverses formes que peuvent revêtir ces orifices, ouvertures (13) sont visibles sur les Figures 11, 12, et 13 où les six paniers portés par le carrousel présentent chacun des ouvertures de formes différentes en nombres différents.

Il est à noter que le dispositif à carrousel des figures 11, 12, et 13 n'est pas le mode de réalisation préféré du dispositif selon l'invention et que ces figures sont simplement données notamment pour montrer les diverses formes que peuvent revêtir les orifices des paniers. Un ou plusieurs des paniers représentés sur ces Figures peuvent, quant à eux faire partie d'un dispositif selon l'invention quel qu'en soit le mode de réalisation et en constituer alors le ou les deuxième(s) récipient(s).

En effet dans le cas où plusieurs paniers sont mis en oeuvre, tous les paniers peuvent présenter des ouvertures de tailles et/ou de formes différentes et/ou en nombres différents, ou bien deux ou plus parmi les paniers peuvent avoir des ouvertures de tailles et/ou de formes identiques et/ou un même nombre d'ouvertures.

Il est évident que tous les paniers peuvent avoir des ouvertures de même forme, de même taille, et en un même nombre dans un souci de facilité de manipulation et de déplacement.

Lorsqu'un seul panier est mis en oeuvre, ce panier peut présenter des ouvertures de tailles et/ou de formes différentes comme celles représentées sur les figures 11, 12, et 13, ou bien deux ou plus parmi les paniers peuvent avoir des ouvertures de tailles et/ou de formes différentes ou bien deux ou plus parmi les paniers et de préférence tous les paniers peuvent avoir des ouvertures de tailles et/ou de formes identiques.

Par exemple, pour ce qui est de la taille des ouvertures dans le cas de paniers cylindriques, par exemple d'une hauteur de 100 mm et d'un diamètre de 21,5 mm, les ouvertures circulaires auront un diamètre de 1 mm et les fentes auront une longueur de 19 mm et une largeur de 1 mm.

Parmi les nombreuses géométries possibles, la forme des ouvertures des paniers représentés sur la Figure 2 qui sont constituées par des fentes, fenêtres (13) ajourées d'une largeur par exemple de 1 mm débutant dans la paroi de base du panier à un intervalle par exemple de 0,8 cm du bord et allant par exemple jusqu'à 15 mm de hauteur sur la paroi latérale (11) (pour des paniers en forme de cylindre ayant par exemple une hauteur de 100 mm et un diamètre de 21,5 mm), permet une évacuation des bulles de gaz lors de la mise en contact des deux milieux fondus sous atmosphère contrôlée.

Cette configuration particulière des ouvertures présente une amélioration par rapport à des paniers ajourés présentant des ouvertures de forme simple comme des cercles.

Une autre géométrie possible, pour les ouvertures des paniers est représentée sur la Figure 3 (A et B). Le panier de la figure 3 reprend la géométrie des fentes, fenêtres (13) de la figure 2 et comporte en outre des fentes, fenêtres (14) sur la paroi latérale entre les parties des fentes (13) qui se trouvent sur ces parois latérales.

La géométrie des ouvertures des paniers représentée sur la figure 3 permet d'augmenter la surface de contact d'un facteur 3 par rapport à la géométrie des ouvertures représentée sur la figure 2.

La mise en oeuvre du procédé selon l'invention, est facilitée lorsque l'un des deux matériaux à l'état liquide, de préférence celui qui se trouve à l'intérieur des paniers ajourés possède une forte valeur de tension superficielle à savoir une tension superficielle supérieure à 0,3 N.m$^{-1}$, c'est le cas par exemple de l'aluminium fondu à 933K [11] qui possède une valeur de tension superficielle de 0,87 N.m$^{-1}$.

Rappelons que la tension superficielle est celle qui règne à la surface du liquide ou plutôt à l'interface entre ledit liquide et l'atmosphère gazeuse régnant dans le four.

Elle est définie comme la force qu'il faut appliquer à l'unité de longueur le long d'une ligne perpendiculaire à la surface d'un liquide en équilibre pour provoquer l'extension de cette surface, ou comme le travail exercé par cette force par unité de surface. L'unité de tension superficielle (N.m$^{-1}$) est équivalente à des joules par mètre carré (J.m$^{-2}$), qui correspondent à une unité d'énergie de surface.

Une telle caractéristique est importante car elle permet de conserver le premier liquide dans les paniers, sans aucune perte, écoulement, lors des déplacements des paniers (par relevage avec la tige décrite plus bas) dans l'atmosphère par exemple d'argon du four entre les immersions dans les différents milieux liquides, tels que des sels fondus, utilisés pour réaliser par exemple les étapes d'extraction des actinides présents dans les solutions de fluorures, suivies respectivement de la désextraction en milieu chlorures fondus.

La hauteur hydrostatique maximale correspond à la hauteur maximale de la colonne du premier liquide qui peut être reçue dans un panier ajouré mis en oeuvre selon l'invention, cette hauteur hydrostatique est notamment fonction de la géométrie des orifices, ouvertures de ce panier.

Comme décrit dans le document [10], on peut calculer la hauteur hydrostatique maximale dans deux cas : le premier est celui où les paniers sont relevés, non immergés et où le premier liquide ou liquide "1" tel que de l'aluminium fondu qui se trouve contenu dans ces paniers est en contact avec le gaz tel que l'argon constituant l'atmosphère du four.

Le second cas est celui où les paniers ajourés sont en contact avec le deuxième (ou le troisième) matériau à l'état liquide tel que des sels fondus.

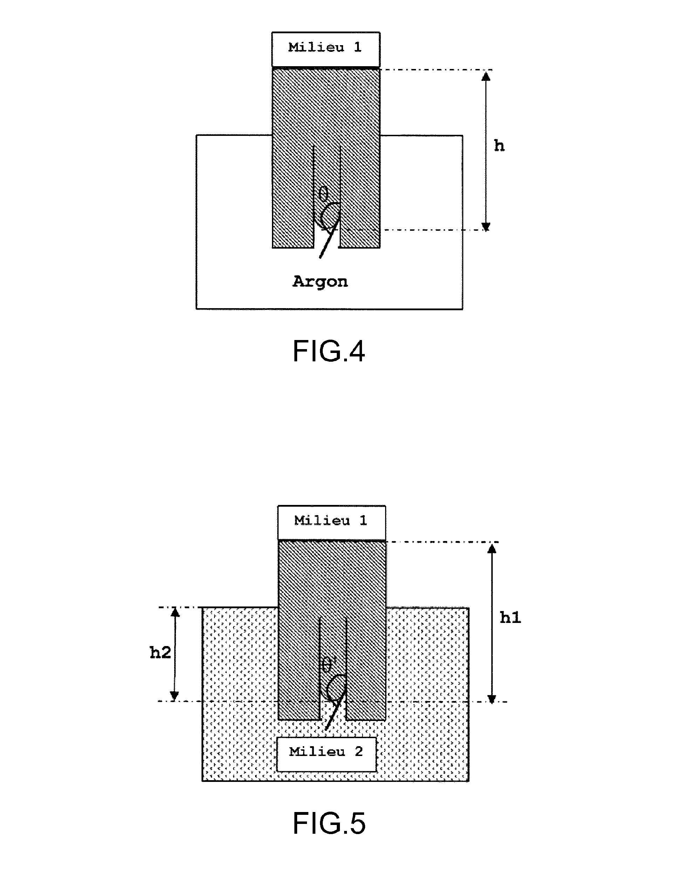

Cette hauteur hydrostatique maximale peut être calculée dans le premier cas à l'aide d'une équation de Young-Laplace que l'on peut qualifier d'équation de Young-Laplace simplifiée, où l'on fait intervenir la tension superficielle à la surface du liquide ou plutôt à l'interface entre le liquide "1" contenu dans le panier tel que de l'aluminium fondu et l'atmosphère gazeuse régnant dans le four lors des étapes de relèvement et de déplacement des paniers. Cette atmosphère est constituée par exemple d'un vide primaire ou d'Argon (Figure 4).

L'équation de Young-Laplace simplifiée est donnée ci-après [12] (Equation n°1) :

$$\rho.g.h = \frac{2.\gamma}{r} . \cos\theta \qquad\qquad (\text{Équation n°1})$$

avec :

ρ : Masse volumique du premier liquide en $Kg.m^{-3}$,

g : 9,81 $m.s^{-2}$,

h : Hauteur du liquide en m,

γ : Tension superficielle du liquide $N.m^{-1}$ (ou $J.m^{-2}$),

r : Rayon du capillaire ou distance entre deux plaques parallèles,

θ : Angle de contact de l'interface liquide avec la paroi solide (plaques parallèles ou capillaires selon la forme des ouvertures).

L'équation n°1 permet de dimensionner des ouvertures de paniers ajourés permettant de contenir différentes hauteurs, de premier matériau à l'état liquide par exemple d'aluminium fondu, sans contre pression d'un deuxième matériau à l'état liquide tel qu'un sel fondu.

Des exemples de calculs de hauteurs "h" d'équilibre sont repris dans le Tableau n°1 ci-après pour différentes géométries d'ouverture du panier pour de l'aluminium avec :

ρ Al: 2700 $Kg.m^{-3}$,

g : 9,81 $m.s^{-2}$,

h : Hauteur maximale du liquide en équilibre (calculée),

γ : 0.87 de $N.m^{-1}$ (ou $J.m^{-2}$) [12],

r : Rayon du trou ou distance entre plaques parallèles,

θ : 160° (angle de contact Al/ nitrure de bore) à la température de 1100K sur du nitrure de bore ([14], J. Mater Sci 2007)) :

Tableau n°1

|  | géométrie circulaire | | géométrie fenêtre | |
|---|---|---|---|---|
| **métal fondu** | Al | Al | Al | Al |
| **creusets** | **1** | **2** | **3** | **4** |
| r | 0,2 cm | 0,1 cm | 0,05 cm | 0,1 cm |
| h calculées | 3,1 cm | 6,2 cm | 12,3 cm | 6,2 cm |

Les valeurs de hauteurs reprises dans le Tableau n°1 ont été calculées à l'aide de l'équation n°1.

Ici, seule la valeur absolue de "h" est importante, ce qui permet d'envisager de travailler avec des colonnes de liquides (Al fondu) comprises entre 3 et 12 cm.

En effet, le calcul analytique donne des valeurs négatives de "h" car l'aluminium ne mouille pas le nitrure de bore.

Pour le système aluminium/nitrure de bore, ces résultats doivent être considérés comme des valeurs guides. En effet, l'angle de contact entre l'aluminium et la céramique BN peut diminuer lorsque la température de fonctionnement dépasse 1100 K ([14], J. Mater Sci 2007).

Dans ces conditions le BN réagit avec l'Al pour former de l'$AlB_2$ et de l'AlN qui dégradent les propriétés de non-mouillabilité. Il est donc conseiller de travailler dans un domaine de température < 1100 K.

Si l'on se place dans le deuxième cas, lorsque les paniers contenant le premier liquide tel que de l'Aluminium fondu sont en contact avec un deuxième (ou troisième) matériau à l'état liquide tel qu'un bain de sels fondus, la propriété de tension interfaciale métal/sel/solide remplace la propriété de tension superficielle métal/gaz/solide.

La nouvelle valeur de l'angle de contact θ', à prendre en compte pour le calcul, doit également concerner ce nouveau point triple comme cela est représenté sur la Figure 5.

Enfin, il est nécessaire de faire un bilan des pressions hydrostatiques au niveau du point triple selon l'équation n°2, ci-après :

$$\rho_2.g.h_2 - \rho_1.g.h_1 = \frac{2.\gamma_{12}}{e}.\cos\theta' \qquad \text{(Équation n°2)}$$

avec :

ρ : Masse volumique en Kg.m$^{-3}$ ($\rho_1$ = 2700 par exemple pour Al, $\rho_2$ # 2700 par exemple pour le sel fondu),
g : 9.81 m.s$^{-2}$,
h : Hauteur du liquide en m ($h_1$ = par exemple Al, $h_2$ = par exemple sel fondu),
$\gamma_{12}$ : Tension interfaciale par exemple sel/métal/support solide, en N.m$^{-1}$ (ou J.m$^{-2}$),
e : Rayon du capillaire ou distance entre deux plaques parallèles (m),
θ' : Angle de contact de l'interface liquide avec la paroi solide (plaques parallèles ou capillaires).

Dans le cadre de la mise un oeuvre d'un système Aluminium/fluorures fondus, on a $\rho_1$ # $\rho_2$ # p, en prenant $h_2$ = $h_1$+Δh, l'équation n°2 devient :

$$\Delta h = \frac{2.\gamma_{12}}{\rho.g.e}.\cos\theta' \qquad \text{(Équation n°3)}$$

Dans le cas présenté ci-dessus, il est possible de calculer la hauteur hydrostatique limite d'aluminium contenu dans les paniers ajourés en fonction de chaque géométrie d'ouverture. Quelques exemples sont repris par le tableau n°2, ci-après, en prenant une valeur $\gamma_{12}$ de 0,72 N.m$^{-1}$ (à 1000K) avec un angle de contact "θ'" de 180° [13] au point triple aluminium / (LiF/AlF$_3$) / Alumine solide. Des exemples de calculs de hauteur d'équilibre sont repris dans le tableau n°2, ci-dessous:

Tableau n°2 : Effet de la géométrie d'ouverture sur la hauteur hydrostatique limite

| Rayon du trou / ou écart entre plaques | 0, 05 cm | 0,10 cm |
|---|---|---|
| Δh equilibre (équation no 3) | 6, 95 cm | 3,47 cm |

Concernant l'utilisation pour un matériau donné, il convient de prendre le meilleur compromis entre la hauteur hydrostatique, c'est-à-dire la quantité de matière à traiter, et la surface d'échange des paniers ajourés, c'est-à-dire l'efficacité du transfert.

De même, lors de l'avancement de l'extraction, si la mise en contact consiste en une extraction, il est observé des modifications de la masse volumique du liquide (due au transfert de matière) contenu dans les paniers. Ce phénomène doit être pris en compte pour le dimensionnement des ouvertures des paniers ajourés.

Sur le schéma de principe des Figures 1A et 1B utilisé pour la modélisation du dispositif et du procédé selon l'invention, on n'a pas représenté l'élément ou pièce support, en d'autres termes le système de maintien et de levage du ou des panier (s) contenant le premier matériau tel que de l'aluminium car ce système n'a aucune influence sur les propriétés électromagnétiques.

En effet, le ou les panier(s) ajouré(s) perforé(s) est (sont) donc généralement fixé(s) à un élément ou pièce support qui permet de le(s) mettre en contact avec le deuxième matériau ou le troisième matériau et de les sortir ensuite du deuxième matériau ou du troisième matériau à l'état liquide. Le matériau support est sans effets sur les lignes de champ.

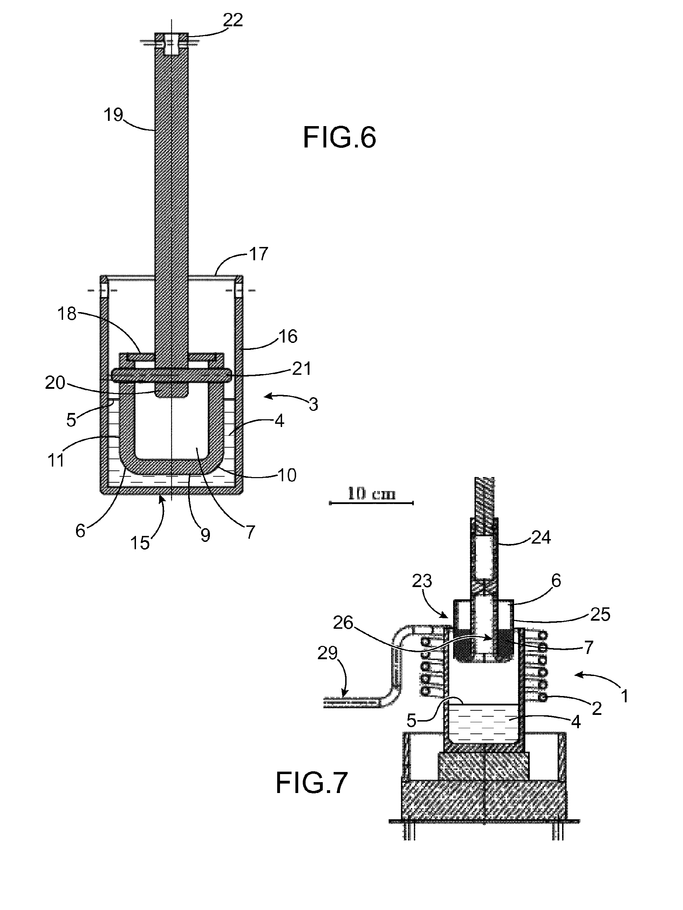

Ainsi sur la Figure 6, on a représenté un mode de réalisation du dispositif selon l'invention dans lequel le creuset (3) contenant le deuxième matériau (4), à savoir le ou les sel(s), a la forme d'un cylindre droit à section droite circulaire, avec une base (15) et une paroi latérale (16), ce creuset est pourvu d'un couvercle (17).

Le panier, creuset, ajouré (6) contenant le premier matériau (7), tel que de l'aluminium, est placé à l'intérieur dudit creuset.

Ce panier (6) a la forme préférée décrite plus haut, à savoir une forme généralement cylindrique, généralement à section droite circulaire avec une paroi inférieure ou fond (9) pourvue d'un usinage arrondi inférieur (10). Sur la Figure 6, le panier est pourvu d'un couvercle (18).

Le dispositif représenté sur la Figure 6 comporte, en outre, un élément ou pièce support, en d'autres termes un système de maintien et de levage du panier ajouré.

Ce système comprend une tige verticale (19) dont une extrémité (20) est solidaire d'une pièce horizontale (21) fixée à la paroi latérale (11) du panier et dont l'autre extrémité (22) est reliée à un dispositif d'actionnement (non représenté) qui permet de descendre et de relever le panier (6).

L'inducteur (non représenté) est placé à l'extérieur du creuset (3) et les spires généralement circulaires de l'inducteur entourent généralement la paroi latérale du creuset (3) comme dans le dispositif de la figure 7.

En d'autres termes, les spires de l'inducteur, la paroi latérale du creuset (3) et la paroi latérale du panier (6) sont concentriques.

Sur la Figure 7, on a représenté un autre mode de réalisation du dispositif selon l'invention dans lequel le panier ajouré (6) contenant par exemple l'aluminium (7) se présente sous la forme d'un récipient annulaire (23) fixé à une tige (24) par l'intermédiaire d'un barreau ou d'une goupille métallique positionnée dans une zone de champ ne risquant pas de l'échauffer.

Le deuxième matériau à l'état liquide (4) est donc en contact avec le premier matériau (7), sur la paroi extérieure (25) du panier annulaire ainsi que sur la paroi intérieure (26) de celui-ci.

Le mode de réalisation du dispositif selon l'invention représenté sur la Figure 7 présente donc l'avantage d'une surface d'échange accrue.

Sur la Figure 7, on a également représenté l'inducteur (1), qui est placé à l'extérieur du creuset (3) et qui se présente sous la forme de spires circulaires (2) entourant le creuset et alimentées par un câble (29) relié à un générateur (non représenté).

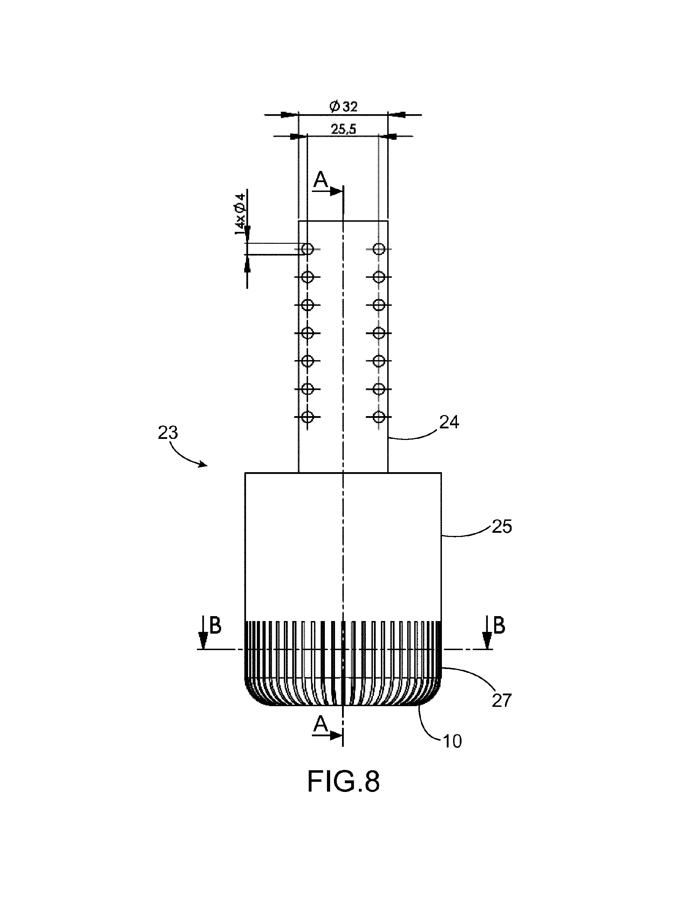

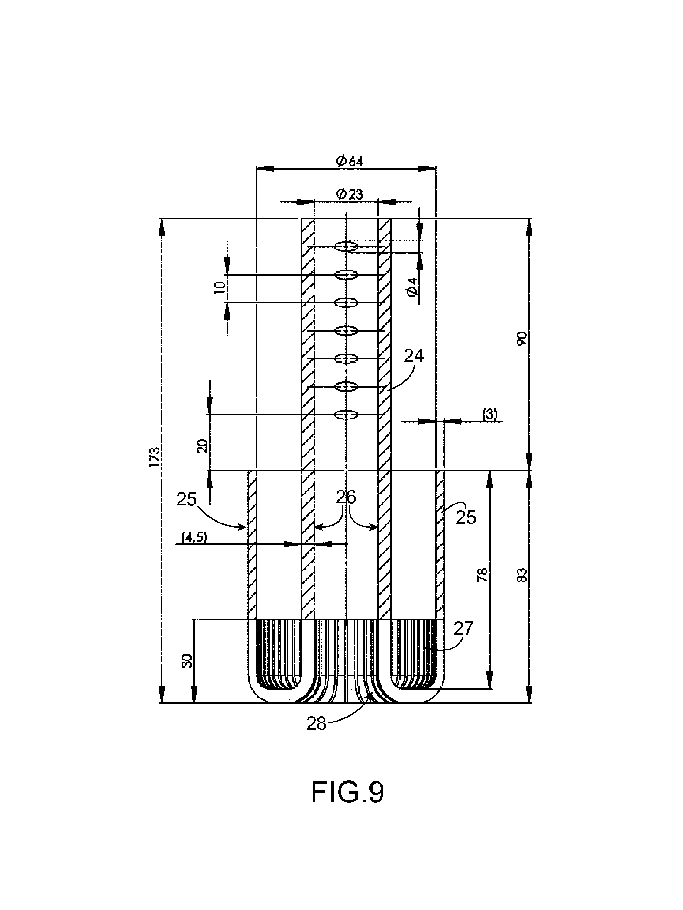

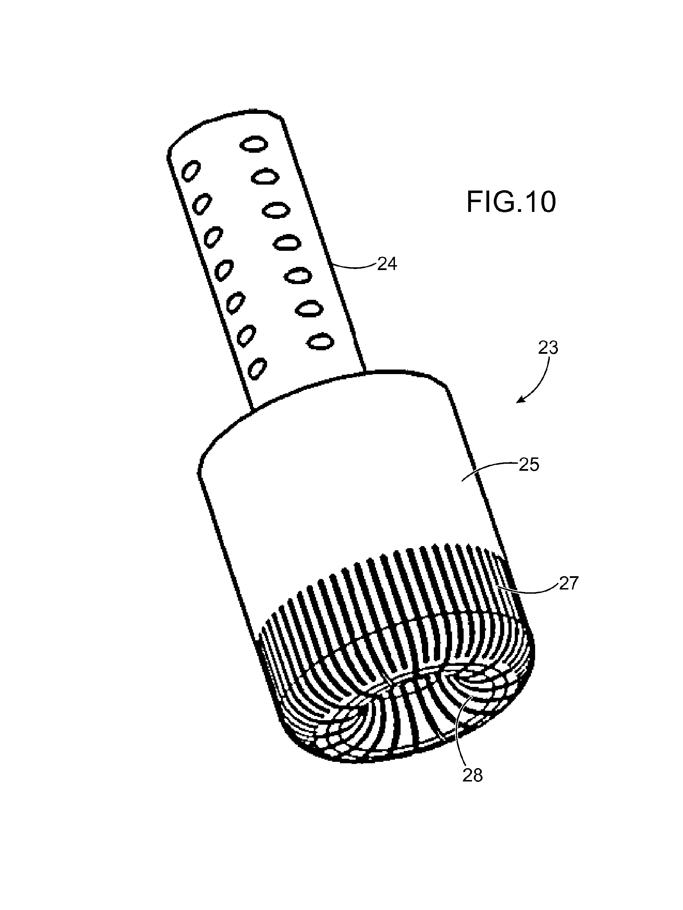

Le panier, récipient, annulaire ajouré (22) du dispositif de la figure 7 est représenté de manière plus précise sur les Figures 8, 9, et 10.

Ce panier, récipient ajouré (23) peut être constitué en un seul bloc de nitrure de bore usiné dans la masse, il propose cinquante fenêtres de contact (27) côté paroi extérieure (25) et 19 fenêtres ajourées (28) côté paroi intérieure (26).

Cet équipement "monolithique" évite d'assembler des pièces soumises à de forts champs de température.

Ce mode de réalisation du dispositif selon l'invention est sensiblement analogue au mode de réalisation du dispositif de la demande [10] WO-A1-2008/080853 décrit sur les Figures 1 à 3 de cette demande, à la différence fondamentale, toutefois, que le dispositif selon l'invention est pourvu d'un inducteur (non représenté) et que les matériaux du creuset et des paniers sont choisis de manière à être transparents au champ magnétique généré par l'inducteur. Il est à noter que le mode de réalisation du dispositif selon l'invention montré sur les figures 11, 12, et 13 n'est pas le mode de réalisation préféré du dispositif selon l'invention qui doit de préférence être axisymétrique.

Cependant un ou plusieurs des paniers représentés sur ces Figures 11, 12, et 13 peuvent être pris séparément pour faire partie d'un dispositif selon l'invention quel que soit le mode de réalisation et en constituer alors le ou les deuxièmes (s) récipient(s).

Le dispositif selon l'invention dans la forme de réalisation de la Figure 11 comprend tout d'abord un récipient, creuset (3) destiné à recevoir le deuxième matériau (4) qui est constitué par un sel ou plusieurs sels mélangés. Le deuxième matériau lorsqu'il est liquide s'élève jusqu'à un niveau (5).

Le creuset (3) se présente généralement sous la forme d'un cylindre droit à section circulaire avec une paroi latérale et un fond. Le dispositif de la Figure 8 comporte un inducteur qui comprend généralement des spires circulaires qui entourent la paroi latérale du creuset (3) et qui sont concentriques à celle-ci.

Le dispositif selon l'invention dans la forme de réalisation de la Figure 11 comprend en outre plusieurs paniers ajourés, perforés (6) déjà décrits plus haut qui contiennent le « premier » matériau à l'état solide puis à l'état liquide (7) qui doit entrer en contact avec le deuxième matériau à l'état liquide (4) contenu dans le creuset (3).

Ces paniers (6) ajourés, perforés, sont fixés à un élément support, que l'on peut nommer carrousel ou barillet (30).

Sur les Figures 12 et 13, le carrousel, barillet (30) supporte six paniers, ajourés, perforés (6) mais il est bien évident qu'un nombre différent de paniers, supérieur, ou inférieur peut être prévu.

Un tel carrousel pourra supporter par exemple de 1 à 6 panier (s), il convient alors de remplacer le ou les panier (s) non utilisé (s) par un nombre correspondant de paniers en matériau plein (Nitrure de bore, alumine, ...) afin de conserver des hauteurs de liquides et des surfaces d'échanges bien maîtrisées.

Le carrousel, barillet, (30) support de paniers comprend également une partie ou pièce centrale (31) qui sur la Figure 11 est représentée immergée dans le deuxième liquide tel qu'un sel fondu placé à l'intérieur du creuset. Cette pièce centrale (31), généralement de forme cylindrique, fait saillie au-delà de la base des récipients, paniers (6).

Le système de barillet, carrousel, illustré permet de changer rapidement le type et la nature des paniers ajourés dont chacun est supporté par une simple clavette.

La partie, ou pièce, centrale (31) du carrousel (30) est évidée (32) et peut recevoir éventuellement un thermocouple et/ou un pont thermique.

Une tige métallique (33) peut ainsi être placée à ces fins dans cette partie centrale évidée (32) du carrousel, barillet (30).

La partie pièce centrale du support de paniers ajourés, ou barillet ou carrousel (30) est donc immergée dans le « second » liquide tel que des sels fondus afin de provoquer un refroidissement local du liquide, de quelques degrés.

La pièce centrale (31) immergée présente également l'intérêt de diminuer le volume « mort » dans le creuset contenant le deuxième liquide tel que des sels fondus. Une telle conception permet d'obtenir un rapport du volume des paniers ajourés sur le volume du creuset proche de 1.

La pièce centrale (31) permet en outre de réaliser une butée de sécurité et de maîtriser le positionnement en hauteur du carrousel dans le système en température, c'est-à-dire dans le système porté à la température de travail qui est notamment une température assurant la fusion des phases métal et sels de chacun des liquides respectifs.

La modification de la géométrie de la partie centrale immergée (31) permet de changer le rapport volumique ou massique des phases en contact et d'optimiser les conditions de fonctionnement du procédé.

A titre d'exemple, la partie centrale immergée (31) du barillet ou carrousel peut présenter une géométrie en étoile ou une géométrie en polygone.

L'ensemble constitué par le barillet, carrousel et les paniers ajourés est maintenu dans la tige (33) à l'aide de goupilles.

La partie haute du carrousel pénètre dans l'espace annulaire de la tige (non métallique) (33) et (34) et est ainsi maintenu en position fixe.

La tige, que l'on peut qualifier de tige de levage, et qui équipe le four, tel qu'un four puits, dans lequel est placé dans le dispositif selon l'invention permet de relever et de déplacer le carrousel et les paniers qui lui sont fixés pour la mettre en contact avec des milieux différents, par exemple différents sels ou mélanges de sels solides puis fondus.

La tige de maintien (33) (34) de l'ensemble formé par le barillet et les paniers peut être reliée à un système de rotation déporté, qui permet ainsi un brassage dynamique du milieu liquide contenu dans le creuset. La mise en oeuvre d'un tel brassage augmente encore l'efficacité de l'appareil.

Le creuset où se trouve le deuxième liquide, tel que des sels fondus, peut être fermé à sa partie supérieure par un couvercle isolant (17). Ce couvercle (17) est traversé par une tige double enveloppe vue en coupe suivant (33) et (34). A la traversée du couvercle sont prévus des trous (35) de fixation sur l'enveloppe extérieure de la tige (34) qui permettent le positionnement en hauteur, à l'aide de clavettes, de l'ensemble du carrousel du pyrocontacteur.

Le dispositif selon l'invention tel que décrit par exemple sur les Figures 1A, 1B, 6, 7, 8, 9, 10, 11, 12, 13 peut fonctionner selon un mode discontinu particulièrement bien adapté à une utilisation en caisson blindé avec de faibles quantités de matières (par exemple 100 à 1000 g de sels fondus et de métal fondu). La mise en oeuvre de quantités plus importantes pourra toutefois être possible à condition de réaliser les adaptations permettant un fonctionnement en continu.

Le procédé et le dispositif selon l'invention tels que décrits plus haut, par exemple les dispositifs tels que décrits sur les Figures 1A, 1B, 6, 7, 8, 9, 10, 11, 12, 13 peuvent être mis en oeuvre pour réaliser toute opération de transfert de matière entre deux liquides.

Cette opération peut notamment être une opération d'extraction liquide/liquide et plus particulièrement une opération d'extraction liquide/liquide à haute température. On parlera alors d'un procédé pyrométallurgique et l'appareil selon l'invention sera alors dénommé pyrocontacteur.

Ce procédé pyrométallurgique et cet appareil pyrocontacteur trouvent leur application notamment dans le domaine du retraitement du combustible nucléaire usé.

Ainsi, le pyrocontacteur permet l'extraction groupée d'actinides contenus dans une solution de fluorures fondus tels que $LiF/AlF_3$.

La mise en contact entre les sels fondus par exemple $LiF/AlF_3$ et les paniers ajourés, contenant un métal fondu tel que de l'aluminium fondu, permet de réduire chimiquement les actinides initialement sous leur forme fluorure en leur forme métallique et de les récupérer dans la phase aluminium.

Le temps de contact entre les deux phases liquides est généralement de 1 minute à 1 heure de préférence de 2 minutes à 45 minutes, par exemple.

Le pyrocontacteur évite le mélange des phases salines et métalliques. A l'équilibre thermodynamique des deux phases liquides, il est alors possible de relever le contacteur contenant le matériau 1 (métal fondu) pour le positionner dans un second milieu salin (troisième liquide) permettant l'étape de désextraction des actinides, par exemple un milieu $LiCl / AlCl_3$.

Suite à ce deuxième contact, le pyrocontacteur peut à nouveau être positionné dans le bain de sels de départ contenant une nouvelle charge de combustible à retraiter.

Le liquide tel que l'aluminium placé dans les paniers ajourés peut être recyclé à l'issue de l'étape de désextraction. Ainsi, le système de paniers agit comme une pompe "chimique" car le composé extractant n'est jamais consommé dans le procédé. Cette pompe "chimique" permet d'extraire et de restituer un ou plusieurs composé(s) en solution sans utiliser un champ de pesanteur ou d'accélérations comme c'est le cas lors de la mise en place d'une décantation ou d'une centrifugation pour séparer les phases mises en contact. Cette caractéristique facilite la mise en oeuvre de l'extraction et représente un réel intérêt pour des procédés à haute température.

On décrit maintenant dans ce qui suit le principe de fonctionnement du dispositif de la Figure 1A ou 1B, afin de mettre en oeuvre le procédé selon l'invention. Une description analogue pourrait être faite pour les dispositifs des Figures 6, 7, et 8 à 13.

On place tout d'abord le premier matériau à l'état solide (7) dans au moins un premier récipient (6) à savoir au moins un panier ajouré tel que décrit plus haut.

Le premier matériau peut être un métal tel que l'aluminium, ou un mélange ou alliage de plusieurs métaux.

Le premier matériau à l'état solide peut se présenter sous la forme d'un seul bloc monolithique ou sous la forme de plusieurs blocs, morceaux, ou encore sous la forme de particules telle qu'une poudre.

On met en contact ledit premier récipient (6) avec un volume du deuxième matériau à l'état solide (4) placé dans au moins un deuxième récipient (3), à savoir un creuset tel qu'il a été décrit plus haut.

Le deuxième matériau (4) peut être un sel ou un mélange de sels.

Tout comme le premier matériau, le deuxième matériau à l'état solide (4) peut se présenter sous la forme d'un seul bloc monolithique ou sous la forme de plusieurs blocs, morceaux, ou encore sous la forme de particules telle qu'une poudre.

Généralement, la mise en contact du premier récipient (6) avec le volume du deuxième matériau (4) consiste simplement à poser le premier récipient (6) sur le deuxième matériau (4) à l'état solide.

Le générateur qui alimente l'inducteur (2) est mis en marche et le courant électrique alternatif qui circule dans l'inducteur génère un champ magnétique.

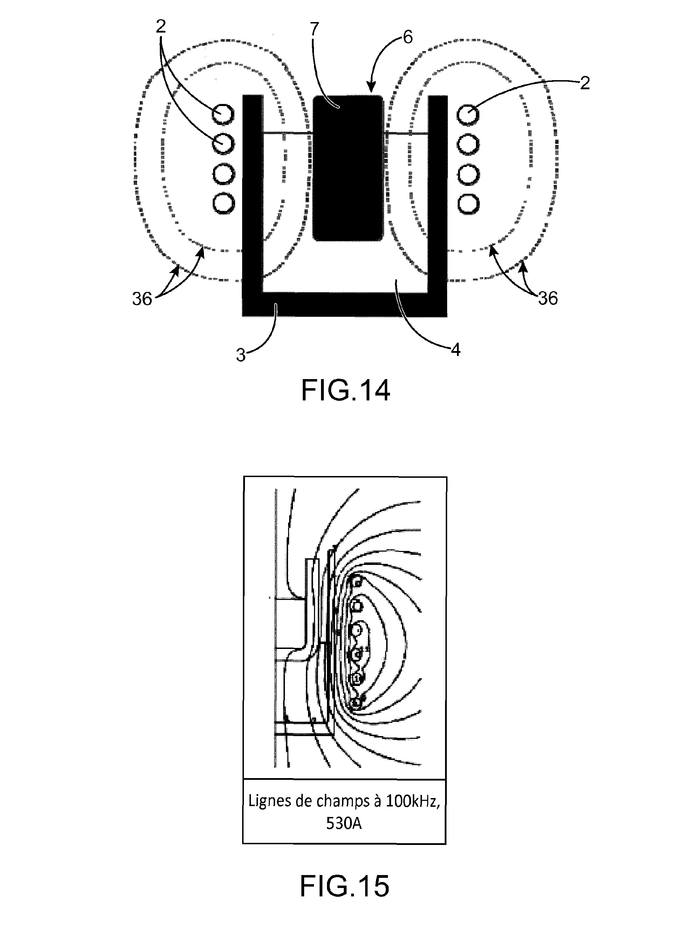

La forme des lignes de champ magnétique (36) est représentée sur la Figure 14.

L'utilisation de matériaux transparents aux ondes électromagnétiques générés par l'inducteur pour le creuset (3) et pour le ou les panier (s) ajouré(s) (6) assure une pénétration des lignes de champ jusqu'au métal, tel que l'aluminium, contenu dans le ou les panier(s) ajouré (s) .

Le champ magnétique provoque des courants induits dans le matériau le plus conducteur qui est en l'occurrence le métal ou l'alliage contenu dans le ou les panier (s) ajouré(s) et qui joue donc le rôle de suscepteur du système.

La dissipation de l'énergie par effet Joule permet la fonte du métal ou de l'alliage.

Le métal tel que l'aluminium ou l'alliage fondu est mis en mouvement sous l'action des forces de Laplace.

Le ou les sel (s) commence (nt) à fondre du fait de l'élévation de température causée par l'apport de chaleur par convection et rayonnement en provenance du métal en fusion tel que l'aluminium ou de l'alliage en fusion.

Le début de fonte du milieu salin et l'apparition d'une conductivité ionique dans ce milieu permet de générer des courants induits dans le sel ou le mélange de sels. L'effet Joule ainsi provoqué augmente la vitesse de fonte du milieu salin.

Du fait de cette fonte, le ou les panier (s) ajouré(s) descend (ent) dans le milieu salin par simple gravité ou bien automatiquement ou manuellement à l'aide d'un système tel qu'il a été décrit plus haut.

Un brassage électromagnétique du milieu salin (4) se produit lors de la fonte de ce milieu, là-encore sous l'action des forces de Laplace.

On a vu plus haut que le dispositif ou pyrocontacteur selon l'invention se caractérise par la double utilisation surprenante des propriétés de l'électromagnétisme dont les lois de conservation de l'énergie permettent l'association d'un effet thermique (chauffage) avec un aspect mécanique des fluides (brassage).

La création d'un champ magnétique par un courant alternatif, à partir des inducteurs (2), est décrite par la loi de Faraday exprimée par l'équation n°4 ci-dessous, dans laquelle "H" représente le champ magnétique et $J_{source}$ la densité de courant :

$$\vec{\nabla} \times \vec{H} = \vec{J}_{source} \quad (\text{Équation n°4})$$

Lorsque le champ magnétique créé par ce courant alternatif est mis en présence d'un milieu conducteur, comme par exemple un métal tel que l'aluminium ou un sel fondu, il engendre des courants induits dans ce milieu conducteur, conformément à la loi de l'induction exprimée par l'équation n°5 ci-dessous :

$$\vec{\nabla} \times \vec{E}_{induit} = -\frac{\partial \vec{B}}{\partial t} \quad (\text{Équation n°5})$$

où B représente l'induction magnétique et $E_{induit}$ le champ électrique induit.

Par ailleurs, la loi d'Ohm appliquée aux milieux conducteurs à chauffer, est exprimée par l'équation n°6 ci-dessous :

$$\vec{J}_{induit} = \sigma . \vec{E}_{induit} \quad \text{(Équation n°6)}$$

où $J_{induit}$ représente la densité de courant induit et $\sigma$ la conductivité électrique.

Le courant induit dans le milieu métal tel que l'aluminium, et le milieu sel fondu, génère des sources de chaleur dues aux pertes par effet Joule.

Le mode de chauffage mis en oeuvre selon l'invention utilise ces sources de chaleur.

En présence d'un champ magnétique créé par les inducteurs et de courants induits dans l'aluminium ou le sel fondu, la force de Laplace $F_1$ exprimée par l'équation n°7 ci-dessous, prend naissance :

$$\vec{dF_l} = I_{induit} \vec{dl} \times \vec{B} \quad \text{(Équation n°7)}$$

avec :

H : champ magnétique en $A.m^{-1}$,

$J_{source}$ : densité de courant source en $A.m^{-2}$,

$E_{induit}$ : champ électrique induit en $V.m^{-1}$,

B : induction magnétique en T,

t : temps en s,

$J_{induit}$ : densité de courant induit en $A.m^{-2}$,

$\sigma$ : conductivité électrique en $S.m^{-1}$,

$F_\ell$ : force de Laplace en N,

$I_{induit}$ : courant induit en A,

$\ell$ : unité de longueur le long d'une boucle de circulation du courant $I_{Induit}$ en m,

Les matériaux à chauffer étant liquides, ceux-ci se mettent alors en mouvement, ce phénomène est appelé brassage électromagnétique.

Il est possible de définir des conditions de fonctionnement permettant de travailler sur des épaisseurs de peau optimales pour le premier matériau à l'état liquide qui est un métal tel que l'aluminium fondu, ou/et pour le deuxième matériau à l'état liquide qui est un sel tel que le LiF fondu.

Cette épaisseur de peau représente l'épaisseur de matériau recevant 2/3 des courants induits.

Par exemple, à 100kHz, l'épaisseur de peau dans l'aluminium est de seulement 0,87 mm alors qu'elle atteint 53 mm pour le sel fondu LiF qui est beaucoup moins conducteur.

Au niveau du système par induction, le courant contrôle directement l'amplitude des courants induits. Ainsi, l'intensité du courant source pilote les vitesses de brassage et le champ de température dans les milieux sels et métal tel qu'aluminium fondu. Dans le cas de l'utilisation d'un système à 6 spires, il est possible d'augmenter la température de 300K dans les deux milieux en augmentant le courant source de 530 A à 760 A (pour une fréquence de 100kHz).

Pour le milieu sel fondu, moins conducteur donc plus difficile à brasser, les vitesses de brassage calculées et mesurées sont de 0,7 mm/s à 50 kHz et 2 cm/s à 150 kHz 130A. tour A 150 kHz le champ de vitesse est donc 10 fois plus élevé que celui obtenu par simple convexion libre sous un gradient de température de 50°C comme cela est détaillé dans le document [10].

Du côté du métal tel que l'aluminium, la vitesse de brassage attendue est de 7cm/s à 50 kHz et de 6cm/s à 150 kHz, 130 A.tour.

Dans le cas où il y a 6 spires, l'intensité est au total de 780 A.

Dans le cas d'un chauffage résistif, la vitesse de brassage par convection aurait été proche de zéro puisqu'il n'y a pas de gradient de température dans l'aluminium qui est un métal thermiquement très conducteur.

Si le milieu salin contient des actinides, le transfert des actinides du milieu salin fondu vers le métal fondu commence, au-travers de la paroi ajourée dès que les deux milieux sont liquides.

Une fois l'équilibre chimique atteint, le ou les récipient(s) ajouré(s) est (sont) sorti(s) du deuxième matériau à l'état liquide, par exemple relevé(s), et le système à induction est arrêté.

On peut ensuite répéter la même succession d'étapes pour réaliser par exemple la désextraction des actinides en mettant en contact le ou les panier(s) ajouré(s) qui contient (contiennent) le métal ou un alliage de métal solide avec un milieu salin spécifique.

L'invention va maintenant être décrite en référence aux exemples suivants donnés à titre illustratif et non limitatif.

## EXEMPLES.

Exemple 1 :

Dans cet exemple, on réalise la modélisation axisymétrique du fonctionnement d'un dispositif selon l'invention tel que représenté par le modèle de la Figure 1B comprenant un système à induction couplé à un dispositif à double creuset en nitrure de bore, comprenant un panier ajouré contenant de l'aluminium et un creuset contenant du LiF.

La modélisation a été réalisée au moyen de calculs à l'aide des logiciels Flux Expert® et Fluent/Ansys®.

Cette modélisation a permis de définir les conditions de fonctionnement permettant un bon compromis entre chauffage et brassage magnétohydrodynamique.

Les résultats obtenus lors de ces modélisations axisymétriques portent sur les lignes de champ en Wb (Figure 15), le gradient de température en °K, et le champ de vitesse en m.s$^{-1}$.

L'utilisation d'un matériau en nitrure de bore (dont les spécificités comme la conductivité électrique etc. sont intégrées dans la modélisation) pour la conception des creusets, permet aux lignes de champ de pénétrer jusqu'à l'intérieur du système (Figure 15). Le couplage sur l'aluminium, très conducteur, génère un champ secondaire qui s'oppose au champ qui lui a donné naissance. Ce phénomène explique la forme particulière des lignes de champ qui semblent être repoussées sur le bord du creuset intérieur.

Le gradient de température confirme le chauffage et la fonte du milieu à une température proche de 1300 K. Ce résultat est obtenu après environ une dizaine de minutes de chauffage.

Toutefois, du point de vue pratique il est conseillé de travailler à une température plus basse (environ 1100K) pour garantir la stabilité du matériau en nitrure de bore vis à vis de l'aluminium ([14] J. Mater. Sci. (2007)), (([15] J. Mater. Sci (1991)).

Enfin, la modélisation en mécanique des fluides indique l'existence d'un champ de vitesse d'une dizaine de cm/s dans l'aluminium et de l'ordre du cm/s à l'intérieur du creuset côté sels fondus.

Exemple 2 :

Dans cet exemple, on réalise des essais pour valider expérimentalement en inactif les résultats des essais de modélisation exposés dans l'exemple 1 et sur la Figure 15, afin de mettre en évidence la fonte du métal et du sel associé à l'existence du brassage électromagnétique du sel fondu a pu être effectivement obtenu.

En effet, la faible valeur de conductivité du milieu "conductivité ionique" peut limiter la mise en place du mouvement de convection forcée, il convient donc de s'assurer de la validité du calcul sur un cas réel.

Le creuset contenant le sel a les mêmes dimensions (diamètre, hauteur) (que le système modélisé (Figures 1A et 1B) mis en oeuvre dans l'exemple 1.

Pour faciliter l'observation du brassage du sel, le dispositif expérimental est modifié pour être équipée d'une tige en graphite de plusieurs mm de diamètre qui remplace le suscepteur en Al. Ce suscepteur permet d'initier la fonte du sel.

Le récipient ou creuset extérieur peut être soit en nitrure de bore « HP » (« *High Pressure* ») soit en nitrure de bore « HIP » (« *Hot Isostatic Pressed* »).

Les expériences ont été réalisées à l'aide d'un système à induction constitué de 6 spires refroidies à l'eau et noyées dans du ciment pour garantir le confinement des matériaux fondus en cas de rupture d'un creuset.

Le générateur utilisé est une triode apériodique de puissance nominale de 100kW et de tension nominale de 800 V efficace. Le générateur est relié à un système d'adaptation d'impédance. Cet ensemble est ensuite relié à l'inducteur solénoïdal en cuivre. Cet inducteur de diamètre 120mm et de 100mm de haut est composé de 6 spires de 10mm de diamètre externe et de 8mm de diamètre interne parcouru par de l'eau pour son refroidissement.

La validation du principe de fonctionnement a fait l'objet de deux essais.

Le premier essai a été réalisé en configuration aluminium et sel LiF.

La vérification de la fonte des deux milieux (métal et sel), a été réalisée en deux temps suivant le scénario suivant : mise en marche de l'induction, couplage sur l'Al, fonte de l'Al, fonte partielle du LiF par conduction thermique de la chaleur et rayonnement du creuset Al, couplage de l'induction sur le LiF partiellement fondu, fonte directe du LiF, maintien de l'ensemble fondu.

Les conditions expérimentales ont mis en contact 127 g d'Al et 700g de LiF. Pour des raisons de conception, la fréquence d'induction utilisée pour l'essai était de 10 kHz. Pour mémoire, cette fréquence n'est pas la plus adaptée pour le couplage sur le sel LiF car l'épaisseur de peau est de 15 cm ce qui est supérieur au rayon du creuset (60mm). Néanmoins, dans ces conditions l'expérience a permis de constater la fonte totale du sel et de l'Al en 2h30 et le maintien du sel et de l'aluminium à l'état fondu grâce à l'induction. La mise en place du creuset d'Al dans le creuset de sel empêche de mesurer le brassage électromagnétique.

Ainsi, un autre essai spécifiquement destiné à la mesure de la vitesse de brassage du sel a donc été réalisé à une fréquence de 100kHz. L'expérience a consisté à remplacer le panier en Al par un suscepteur en graphite pour initier la fonte du sel. Dans ces conditions il a été possible de refondre un bloc de LiF de 700g en seulement 17 minutes. Une fois fondu, le suscepteur en graphite a été remonté et le chauffage inductif volontairement coupé pour solidifier la phase supérieur du sel. Après 4 minutes, l'induction est remise en fonctionnement et la conductivité du sel permet une refonte très rapide de la partie solidifiée. Le milieu liquide a été ensemencé de particules de graphite dont la densité de 2,26 est proche de celle du LiF qui est de 1,8.

Ces particules sont suivies à l'aide d'un système photographique qui réalise une prise de vue tous les 16 centièmes de seconde.

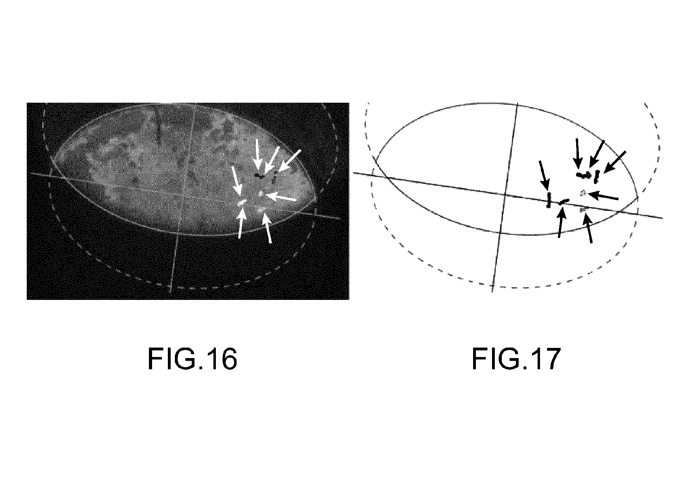

Ainsi, la Figure 16, est une photographie réalisée lors de la mesure de la vitesse de brassage par couplage direct du système à induction sur le sel fondu et la Figure 17 est la transcription graphique du mouvement des particules observé sur la figure 16.

Sur les Figures 16 et 17, chaque flèche désigne un ensemble de points formant ainsi un segment représentatif du mouvement d'une particule observée.

Le suivi du mouvement des particules à la surface du sel fondu (flèches sur les Figures 16 et 17) a permis de mesurer des vitesses moyennes de déplacement de quelques cm/s.

Ce résultat expérimental confirme ainsi les valeurs de champ de vitesse obtenues lors des travaux de modélisation de l'exemple 1.

Les Figures 16 et 17, prouvent que l'utilisation du système à induction selon l'invention permet d'associer un chauffage rapide à un brassage dynamique des différents milieux liquides.

Une fois refroidi, le creuset a toujours conservé ses propriétés de surface avec notamment un bon démoulage du bloc de sel. Ce constat a été obtenu après 3 campagnes de fonte d'une durée totale de 4 heures.

## RÉFÉRENCES

[1] Conocar, O., et al., "Promising pyrochemical actinide/lanthanide separation processes using aluminum", Nuclear Science and Engineering, 2006. 153(3): p. 253-261.

[2] Conocar, O., N. Douyere, and J. Lacquement, "Extraction behavior of actinides and lanthanides in a molten fluoride/liquid aluminum system", Journal of Nuclear Materials, 2005, 344 (1-3): p. 136-141.

[3] F.B. Hill, L.E. Kukaka, "Axial mixing and mass transfer in fused salt - liquid metal extraction column", USAEC Report BNL-791, 1963.

[4] D.D. SOOD, "Experimental studies for reprocessing of molten salt reactor fuels", Proc. Symp. Chemical reactions in non-aqueous média and molten salts, Osmania Univ., Hyderabad, Inde, 6-8/03/1978.

[5] P.R. Josephson, L. Burkhart, *"Apparatus for treatment of molten material",* US-A-3 156 534 du 10/11/1964.

[6] W.E. Miller, J.B. Knighton, G.J. Bernstein *"Mixer settler apparatus"* US-A-3 663 178 (1972).

[7] L.S. Chow, R.A. Léonard *"Centrifugal pyrocontactor",* US-A-5 254 076 (1993).

[8] Pravin G. *"Surface tension method of and apparatus for separating immiscible liquids"* US-A-3 703 463, nov. 1972.

[9] Majer Denis John *"Improvements relating to apparatus for separating two immiscible liquids"* GB-A-2 127318, 11/04/1984.

[10] WO-A1-2008/080853.

[11] N. Eustathopoulos "Tension superficielle", Techniques de l'ingénieur M67, 03/1999

[12] B. Le Neindre « Tensions superficielles des composés inorganiques et mélanges », Techniques de l'ingénieur K476-1

[13] E.W. Dewing & Paul Desclaux, "The interfacial tension between aluminium and cryolite melts saturated with alumina", Metallurgical transactions B, volume 8B, Dec. 1977, pp. 555-561.

[14] Pieng Shen, Hidetoshi Fujii, Kiyoshi Nogi "Effect of temperature and surface roughness on the wettability of boron nitride by molten Al", J. Mater. Sci. (2007), 42, pp 3564-3568

[15] X.M. Xue, J.T. Wang, M.X. Quan "Wettability and spreading kinetics of liquid aluminium on boron nitride", J. Mater. Sci. (1991) 262 pp 6391-6395

[16] Lacquement, J., et al., "Potentialities of fluoride-based salts for specific nuclear reprocessing: Overview of the R&D program at CEA". Journal of Fluorine Chemistry, 2009, 130(1): p. 18-21.

[17] McFarlane, H.F. and M.J. Lineberry, "The IFR fuel cycle demonstration". Progress in Nuclear Energy, 1997, 31(1-2): p. 155-173.

[18] Brunsvold, B.R.W.P.D.R.A.R., "Design and developpment of a cathod processor for electrochemical treatment of spent nuclear fuel". Proceeding, 8th international conference on nuclear engineering, 2000 (ICONE-8702).

[19] Hayashi, H., et al., "Pyrochemical reprocessing method for spent nuclear fuel and induction heating system to be used in pyrochemical reprocessing method", Japan Nuclear Cycle Development Institute.

[20] Lashley, J.C., et al., "In situ purification, alloying and casting methodology for metallic plutonium". Journal of Nuclear Materials, 1999, 274 (3) : p. 315-319.
[21] WO-A1-98/05185.
[22] WO-A1-03/106009.

**Revendications**

1. Procédé de mise en contact sans mélange d'un premier matériau (7), constitué par un métal ou par un alliage de plusieurs métaux, à l'état liquide, et d'un deuxième matériau (4), constitué par un sel ou un mélange de plusieurs sels, à l'état liquide, ledit premier matériau (7) et ledit deuxième matériau (4) à l'état liquide étant immiscibles, ledit premier matériau (7) étant conducteur de l'électricité à l'état solide et à l'état liquide, et ledit deuxième matériau (4) étant conducteur de l'électricité à l'état liquide et éventuellement à l'état solide, dans lequel on réalise les étapes successives suivantes :

   a) on place le premier matériau (7), à l'état solide, dans au moins un premier récipient (6) comprenant une paroi en un matériau solide réfractaire, non conducteur de l'électricité, transparent à un champ magnétique créé par au moins un inducteur (1), et non réactif vis-à-vis du premier (7) et du deuxième (4) matériaux, ladite paroi comprenant un ou plusieurs orifice(s) traversant(s) (13,14) ; le premier matériau (7) à l'état liquide étant non mouillant vis-à-vis dudit matériau solide de la paroi ;
   b) on met en contact ledit premier récipient (6) avec un volume du deuxième matériau (4) à l'état solide, placé dans au moins un deuxième récipient (3) en un matériau solide réfractaire, transparent à un champ magnétique créé par au moins un inducteur (1), non conducteur de l'électricité et non réactif vis-à-vis du deuxième matériau (4) ;
   c) on soumet le premier (6) et le deuxième (3) récipients à l'action d'un champ électromagnétique (36) créé par au moins un inducteur (1), moyennant quoi des courants électriques induits sont générés dans le premier matériau (7) à l'état solide et provoquent la fusion du premier matériau (7) ;
   d) le premier matériau (7) à l'état liquide se met en mouvement sous l'action de forces de Laplace ;
   e) le deuxième matériau (4) à l'état solide commence à fondre sous l'effet d'un flux de chaleur en provenance du premier récipient (6) par conduction et rayonnement;
   f) une conductivité ionique apparaît dans le deuxième matériau (4) permettant le développement de courants électriques induits qui accélèrent la fusion du deuxième matériau (4) ; ;
   g) le deuxième matériau (4) à l'état liquide se met en mouvement sous l'action de forces de Laplace ;
   h) le premier matériau (7) à l'état liquide étant en contact avec le deuxième matériau (4) à l'état liquide au niveau desdits orifices (13), on laisse en contact le premier matériau (7) à l'état liquide avec le deuxième matériau (4) à l'état liquide pendant une durée suffisante pour que se produise un échange, transfert de matière entre le premier matériau (7) à l'état liquide et le deuxième matériau (4) à l'état liquide ;
   i) on retire le premier récipient (6) du volume du deuxième matériau (4) à l'état liquide ;
   j) on refroidit le premier récipient (6) jusqu'à ce que le premier matériau (7) revienne à l'état solide ; de préférence : les étapes b) à g) sont réalisées sous un vide primaire de 10-2 mbar à 10-1 mbar absolus et l'étape h) est réalisée sous une atmosphère de gaz inerte tel que l'argon.

2. Procédé selon la revendication 1, dans lequel le courant parcourant l'inducteur (1) a une intensité de 100 à 3000 A.Tour ou spire, de préférence de 100 à 1000 A. Tour ou spire, et une fréquence de 20 à 400 kHz, par exemple de 200 kHz.

3. Procédé selon l'une quelconque des revendications précédentes, dans lequel le courant parcourant l'inducteur (1) a une fréquence qui est choisie de façon à régler l'épaisseur de peau pour le premier (7) et le deuxième (4) matériaux, en fonction de la géométrie du premier (6) et du deuxième (3) récipients et des propriétés de conductivités électriques respectives du premier matériau (7) et du deuxième matériau (4).

4. Procédé selon l'une quelconque des revendications précédentes, dans lequel le champ électromagnétique créé par l'inducteur (1) génère un flux d'induction magnétique compris entre $10^{-6}$ et $10^{-3}$ Wb.

5. Procédé selon l'une quelconque des revendications 1 à 4, dans lequel le champ électromagnétique créé par l'inducteur (1) est un champ glissant.

6. Procédé selon la revendication 5, dans lequel plusieurs inducteurs indépendants sont prévus, chaque inducteur étant constitué par une seule spire parcourue par un courant, et entre chaque inducteur la partie réelle du courant est déphasée de 90° ou $\pi/2$.

7. Procédé selon l'une quelconque des revendications précédentes, dans lequel la masse volumique du premier matériau (7) à l'état liquide et la masse volumique du deuxième matériau (4) à l'état liquide sont identiques ou proches ; de préférence la masse volumique du premier matériau (7) à l'état liquide et la masse volumique du deuxième matériau (4) à l'état liquide ne diffèrent pas de plus de 10%, de préférence pas de plus de 5%, de préférence encore pas de plus de 1%.

8. Procédé selon l'une quelconque des revendications précédentes, dans lequel la tension interfaciale du point triple ; premier matériau (7) à l'état liquide / deuxième matériau (4) à l'état liquide / matériau solide de la paroi du premier récipient (6) est élevée ; de préférence la tension interfaciale du point triple premier matériau (7) à l'état liquide / deuxième matériau (4) à l'état liquide / matériau solide de la paroi du premier récipient (6) est supérieure à 0,3 N.m$^{-1}$, de préférence supérieure à 0,6 N.m$^{-1}$.

9. Procédé selon l'une quelconque des revendications précédentes, dans lequel le premier matériau (7) à l'état liquide présente une tension superficielle supérieure à 0,3 N.m$^{-1}$, de préférence supérieure à 0,8 N.m$^{-1}$.

10. Procédé selon l'une quelconque des revendications précédentes, dans lequel ledit métal ou ledit alliage de plusieurs métaux est choisi parmi les métaux et alliages à caractère réducteur comme l'aluminium et ses alliages ; et dans lequel le ou les sels est (sont) choisi (s) parmi les chlorures de métaux alcalins, les chlorures de métaux alcalino-terreux, et les chlorures d'aluminium comme par exemple LiCl, AlCl$_3$ ; et les fluorures de métaux alcalins, les fluorures de métaux alcalino-terreux, et les fluorures d'aluminium comme par exemple LiF, et AlF$_3$.

11. Procédé selon l'une quelconque des revendications précédentes, dans lequel à l'issue de l'étape j), on répète les étapes b) à j) en mettant le premier récipient (6) en contact avec un volume d'un troisième matériau, constitué par un sel ou un mélange de plusieurs sels, différent du deuxième matériau (4).

12. Procédé selon l'une quelconque des revendications précédentes, dans lequel ledit transfert de matière entre le premier (7) et le deuxième (4) matériaux à l'état liquide est une extraction liquide/liquide au cours de laquelle l'un des constituants du deuxième matériau (4) à l'état liquide passe dans le premier matériau (7) à l'état liquide et/ou l'un des constituants du premier matériau (7) à l'état liquide passe dans le deuxième matériau (4) à l'état liquide ; de préférence ledit premier matériau (7) est de l'aluminium ou un alliage d'aluminium, et le deuxième matériau (4) comprend des sels de fluorures de métaux alcalins ou alcalino-terreux contenant du fluorure d'aluminium et dans lesquels se trouvent dissous un ou plusieurs fluorure(s) d'actinides et un ou plusieurs fluorure (s) de lanthanide(s) ; et lors de l'étape h), lesdits fluorures d'actinides sont réduits chimiquement par contact avec l'aluminium ou l'alliage d'aluminium fondu en lesdits actinides qui passent en solution dans le premier matériau à l'état liquide, tandis que les fluorures de lanthanides restent dans le deuxième matériau (4) à l'état liquide.

13. Procédé selon la revendication 12, dans lequel à l'issue de l'étape j), on répète les étapes b) à j) en mettant en contact ledit ou lesdits premier(s) récipient(s) (6) contenant l'aluminium ou l'alliage d'aluminium et les actinides avec un volume d'un troisième matériau constitué par un ou plusieurs chlorure(s) de métaux alcalin(s) ou alcalino-terreux contenant du chlorure d'aluminium, moyennant quoi les actinides sont oxydés chimiquement par contact avec lesdits chlorures fondus en chlorures d'actinides qui passent dans le troisième matériau à l'état liquide, et la réduction du chlorure d'aluminium permet de générer l'aluminium métal qui est éventuellement réutilisé.

14. Dispositif pour la mise en oeuvre du procédé selon l'une quelconque des revendications 1 à 13, comprenant :

   - un ou plusieurs premier(s) récipient(s) (6) destiné(s) à recevoir un premier matériau (7) à l'état solide ou liquide et comprenant des parois en un matériau solide réfractaire, non conducteur de l'électricité, non réactif vis-à-vis du premier (7) et du deuxième (4) matériaux et transparent à un champ magnétique créé par au moins un inducteur (1), lesdites parois comprenant un ou plusieurs orifice(s) traversant(s) (13,14) ; le premier matériau (7) à l'état liquide étant non mouillant vis-à-vis dudit matériau solide des parois;
   - un deuxième récipient (3) destiné à recevoir un volume d'un deuxième matériau (4) à l'état solide ou liquide, et comprenant des parois en un matériau solide réfractaire, non conducteur de l'électricité, non réactif vis-à-vis du deuxième matériau (4) et transparent à un champ magnétique créé par au moins un inducteur (1) de préférence refroidi ;
   - des moyens (19,20,21,22,24) pour supporter le ou les premier(s) récipient(s) (6) contenant le premier matériau

EP 2 734 278 B1

(7) afin de les mettre en contact avec ledit volume du deuxième matériau (4) et de les retirer, ensuite, du volume du deuxième matériau (4) ;
- des moyens, constitués par au moins un inducteur (1), situés à l'extérieur des parois du deuxième récipient (3), pour soumettre le(s) premier(s) récipient(s) (6) et le deuxième récipient (3) à l'action d'un champ électromagnétique ; de préférence le ou lesdits premier(s) récipient (s) (6) et le deuxième récipient (3) sont en un matériau choisi parmi l'alumine, et le nitrure de bore.

15. Dispositif la revendication 14, dans lequel lesdits orifices (13,14) ont une forme en section droite choisie parmi les cercles ; les polygones tels que les carrés, les rectangles, en particulier les rectangles dont le rapport longueur/largeur est élevé.

16. Dispositif selon l'une quelconque des revendications 14 et 15, dans lequel le(s)dit(s) premier(s) récipient(s) (6) est (sont) un (des) cylindre(s) à section droite circulaire comportant des parois latérales (11) et une paroi de base ou fond (9) ; de préférence la géométrie du fond du ou desdits premier(s) récipient(s) (6) est arrondie (10) .

17. Dispositif selon l'une quelconque des revendications 14 à 16, dans lequel le(s)dit(s) premier(s) récipient(s) (6) ont une forme annulaire (23) ; de préférence la géométrie du fond du ou desdits premier(s) récipient(s) (6) est arrondie (10).

18. Dispositif selon l'une quelconque des revendications 14 à 17, dans lequel le deuxième récipient (3) est un cylindre à section droite circulaire comportant des parois latérales (16) et une paroi de base ou fond (15).

19. Dispositif selon l'une quelconque des revendications 14 à 18 dans lequel le deuxième récipient (3) entoure le(s) premier(s) récipient(s) (6) et le deuxième récipient (3) est plus proche du ou des inducteur(s) (1) que le(s) premier(s) récipient(s) (6).

20. Dispositif selon l'une quelconque des revendications 14 à 19, dans lequel l'inducteur (1) est constitué par une bobine à induction dont les spires (2) sont placées au voisinage des parois du deuxième récipient (3) et notamment de ses parois latérales lorsque celui-ci est cylindrique.

21. Dispositif selon l'une quelconque des revendications 14 à 20, qui comprend un seul premier récipient (6), un seul deuxième récipient (3) et au moins un inducteur (1) qui sont symétriques par rapport à un même axe central vertical.

22. Dispositif selon la revendication 21, qui comprend un premier récipient (6) cylindrique ou annulaire et un deuxième récipient (3) cylindrique, le premier récipient (6) et le deuxième récipient (3) étant concentriques, avec le deuxième récipient (3) entourant le premier récipient (6), et leurs axes principaux étant confondus ; de préférence l'inducteur (1) est constitué par une ou des spire(s) circulaire(s) (2) entourant la paroi latérale du deuxième récipient (3) et concentrique(s) à celle-ci, l'axe principal de cette (ces) spires (2) étant confondu avec les axes principaux du premier (6) et du deuxième récipients cylindriques(3).

23. Dispositif selon l'une quelconque des revendications 14 à 22, dans lequel lesdits moyens pour supporter le(s)dit(s) premier(s) récipient(s) (6), les immerger dans ledit volume du deuxième liquide (4), et les retirer dudit volume de deuxième liquide (4) comprennent une tige verticale (24,33,34) à l'extrémité inférieure de laquelle est fixé un élément (30) supportant le(s) premier(s) récipient(s) (6) ; de préférence ledit élément supportant le(s) premier(s) récipient(s) (6) a la forme d'un carrousel ou barillet circulaire (30), comprenant un axe central situé dans le prolongement de ladite tige verticale (33,34), plusieurs premiers récipients (6) étant disposés selon un cercle concentrique à l'axe central dudit carrousel ou barillet (30).

**Patentansprüche**

1. Verfahren zur mischungsfreien Kontaktierung eines ersten Stoffs (7), gebildet durch ein Metall oder durch eine Legierung aus mehreren Metallen, im flüssigen Zustand, und eines zweiten Stoffs (4), gebildet durch ein Salz oder eine Mischung aus mehreren Salzen, im flüssigen Zustand, wobei der erste Stoff (7) und der zweite Stoff (4) im flüssigen Zustand unmischbar sind, der genannte erste Stoff (7) im festen Zustand und im flüssigen Zustand elektrisch leitfähig sind, und der genannte zweite Stoff (4) im flüssigen Zustand und eventuell im festen Zustand elektrisch leitfähig ist, bei dem man die folgenden Schritte durchführt :

24

a) man platziert den ersten Stoff (7) im festen Zustand in wenigstens einen Behälter (6) mit einer Wand aus einem hitzebeständigen festen Material, elektrisch nichtleitend, durchlässig für ein Magnetfeld, erzeugt von wenigstens einem Induktor (1), und nicht-reaktiv gegenüber dem ersten (7) und dem zweiten (4) Stoff, wobei die genannte Wand eine oder mehrere Durchgangsöffnung(en) (13, 14) umfasst und dabei der erste Stoff (7) im flüssigen Zustand gegenüber dem genannten festen Material der Wand nichtnetzend ist;

b) man bringt den genannten ersten Behälter (6) in Kontakt mit einem Volumen eines zweiten Stoffs (4) im festen Zustand, platziert in wenigstens einem zweiten Behälter (3) aus einem hitzebeständigen festen Material, durchlässig für ein Magnetfeld, erzeugt von wenigstens einem Induktor (1), elektrisch nicht-leitend und nicht-reaktiv gegenüber dem zweiten Stoff (4);

c) man setzt den ersten (6) und den zweiten (3) Behälter der Wirkung eines durch wenigstens einen Induktor (1) erzeugten elektromagnetischen Feldes (36) aus, wobei in dem ersten Stoff (7) im festen Zustand elektrische Induktionsströme erzeugt werden, die das Schmelzen des ersten Stoffs (7) bewirken ;

d) der erste Stoff (7) im flüssigen Zustand wird durch die Wirkung der Laplace-Kräfte in Bewegung versetzt;

e) der zweite Stoff (4) im festen Zustand beginnt zu schmelzen unter der Wirkung eines von dem ersten Behälter (6) ausgehenden Wärmeflusses, durch Leitung und Strahlung ;

f) in dem zweiten Stoff (4) tritt eine Elektronenkonduktivität ein, welche die Entwicklung von Induktionsströmen ermöglicht, die das Schmelzen des zweiten Stoffs (4) beschleunigen ;

g) der zweite Stoff (4) im flüssigen Zustand wird durch die Wirkung der Laplace-Kräfte in Bewegung versetzt;

h) der erste Stoff (7) im flüssigen Zustand in Kontakt mit dem zweiten Stoff (4) in flüssigen Zustand in Höhe der genannter Öffnungen ist, man lässt den ersten Stoff (7) im flüssigen Zustand, in Kontakt mit dem zweiten Stoff (4) im flüssigen Zustand, während einer Dauer, die ausreicht für einen Austausch, Transfer von Stoff zwischen dem ersten Stoff (7) im flüssigen Zustand und dem zweiten Stoff (4) im flüssigen Zustand ;

i) man zieht den ersten Behälter (6) aus dem Volumen des zweiten Stoffs (4) im flüssigen Zustand heraus ;

j) man kühlt den ersten Behälter (6) ab, bis der erste Stoff (7) in den festen Zustand zurückkehrt; vorzugsweise werden die Schritte b) bis g) unter einem Primärvakuum von 10-2 mbar bis 10-1 mbar absolut durchgeführt und der Schritt h) wird in einer Inertgas-Atmosphäre, etwa Argon, realisiert.

2. Verfahren nach Anspruch 1, bei dem der Strom den Induktor (1) mit einer Stärke von 100 bis 3000 A.Umrundung oder Windung, vorzugsweise von 100 bis 1000 A.Umrundung oder Windung, und einer Frequenz von 20 bis 400 kHz, zum Beispiel von 200 kHz, durchfließt.

3. Verfahren nach einem der vorhergehenden Ansprüche, bei dem der Strom den Induktor (1) mit einer Frequenz durchfließt, die ausgewählt wird, um die Dicke der Haut für den ersten (7) und den zweiten (4) Stoff einzustellen, in Abhängigkeit von der Geometrie des ersten (6) und zweiten (3) Behälters und den elektrischen Leitfähigkeitseigenschaften von jeweils dem ersten Stoff (7) und dem zweiten Stoff (4).

4. Verfahren nach einem der vorhergehenden Ansprüche, bei dem das durch den Induktor (1) generierte elektromagnetische Feld einen zwischen $10^{-6}$ und $10^{-3}$ Wb enthaltenen magnetischen Induktionsfluss erzeugt.

5. Verfahren nach einem der Anspruche 1 bis 4, bei dem das durch den Induktor (1) generierte elektromagnetische Feld ein Gleitfeld ist.

6. Verfahren nach Anspruch 5, bei dem mehrere unabhängige Induktoren vorgesehen sind, wobei jeder Induktor durch eine einzige von einem Strom durchflossene Windung gebildet wird, und zwischen jedem Induktor der Realteil des Stromes um 90° phasenverschoben ist.

7. Verfahren nach einem der vorhergehenden Ansprüche, bei dem die Dichte des ersten Stoffs (7) im flüssigen Zustand und die Dichte des zweiten Stoffs (4) im flüssigen Zustand gleich oder annähernd gleich sind ; vorzugsweise unterscheiden sich die dichte des ersten Stoffs (7) im flüssigen Zustand und die Dichte des zweiten Stoffs (4) im flüssigen Zustand um nicht mehr als 10 %, besser um nicht mehr als 5 % und noch besser um nicht mehr als 1 %.

8. Verfahren nach einem der vorhergehenden Ansprüche, bei dem die Grenzflächenspannung des Tripelpunkts: erster Stoff (7) im flüssigen Zustand / zweiter Stoff (4) im flüssigen Zustand I festes Material der Wand des ersten Behälters (6), hoch ist; vorzugsweise ist die Grenzflächenspannung des Tripelpunkts: erster Stoff (7) im flüssigen Zustand / zweiter Stoff (4) im flüssigen Zustand / festes Material der Wand des ersten Behälters (6) - höher als 0,3 N.m$^{-1}$, vorzugsweise höher als 0,6 N.m$^{-1}$.

9. Verfahren nach einem der vorhergehenden Ansprüche, bei dem der erste Stoff (7) im flüssigen Zustand eine Oberflächenspannung von mehr als 0,3 N.m$^{-1}$ vorzugsweise mehr als 0,8 N.m$^{-1}$ aufweist.

10. Verfahren nach einem der vorhergehenden Ansprüche, bei dem das genannte Metall oder die genannte Legierung aus mehreren Metallen ausgewählt wird unter den Metallen und Legierungen mit reduzierender Eigenschaft wie Aluminium und seine Legierungen ; und bei dem das (oder die) Salz(e) ausgewählt wird (werden) unter den Chloriden von Alkalimetallen, den Chloriden von Erdalkalimetallen, und den Chloriden von Aluminium wie zum Beispiel LiCl AlCl$_3$; und den Fluoriden von Alkalimetallen, den Fluoriden von Erdalkalimetallen, und den Fluoriden von Aluminium wie zum Beispiel LiF, und AlF$_3$.

11. Verfahren nach einem der vorhergehenden Ansprüche, bei dem man am Ende des Schritts j) die Schritte b) bis j) wiederholt, indem man den ersten Behälter (6) in Kontakt bringt mit einem Volumen eines dritten Stoff, gebildet durch ein Salz oder eine Mischung aus mehreren Salzen, unterschiedlich vom zweiten Stoff (4).

12. Verfahren nach einem der vorhergehenden Ansprüche, bei dem der genannte Stofftransfer zwischen dem ersten (7) und dem zweiten (4) Stoff im flüssigen Zustand eine Flüssigkeit/Flüssigkeit-Extraktion ist, in deren Verlauf einer der Bestandteile des zweiten Stoffs (4) im flüssigen Zustand in den ersten Stoff (7) im flüssigen Zustand passiert bzw. übergeht und/oder einer der Bestandteile des ersten Stoffs (7) im flüssigen Zustand in den zweiten Stoff (4) im flüssigen Zustand übergeht; vorzugsweise ist der genannte erste Stoff (7) Aluminium oder eine Aluminiumlegierung, und der zweite Stoff (4) enthält Fluoridsalze von Alkalimetallen oder Erdalkalimetalle die Aluminiumfluorid enhalten, und in denen gelöst sich ein oder mehrere Aktinidfluoride und ein oder mehrere Lanthanidfluoride befinden ; und während, des Schritts h) werden die genannten Aktinidfluoride chemisch reduziert durch Kontakt mit dem - oder der - mit den genannten Aktiniden verschmolzenen Aluminium - oder Aluminiulegierung, die in dem ersten Stoff im flüssigen Zustand in Lösung gehen, während die Lanthanidfluoride im dem zweiten Stoff (4) im flüssigen Zustand bleiben.

13. Verfahren nach Anspruch 12, bei dem man am Ende des Schritts j) die Schritte b) bis j) wiederholt, indem man den oder die ersten Behälter (6), der (die) das Aluminium oder die Aluminiumlegierung und die Aktinide mit einem Volumen eines dritten Stoffs in Kontakt bringt (bringen), der gebildet wird durch ein oder mehrere alkalische oder erdalkalische Metallchlorid(e), die Aluminiumchlorid enthalten, wodurch die Aktinide chemisch oxidiert werden durch Kontakt mit den zu Aktinidchloriden verschmolzenen Chloriden, die in den dritten Stoff im flüssigen Zustand passieren bzw. übergehen, und die Reduktion des Aluminiumchlorids ermöglicht, metallisches Aluminium zu generieren, das eventuell wiederverwendet wird.

14. Vorrichtung zur Durchführung des Verfahrens nach einem der Ansprüche 1 bis 13, umfassend :

   - einen oder mehrere erste Behälter (6), bestimmt zu Aufnahme eines ersten Stoffs (7) im festen oder flüssigen Zustand, dabei Wände aus einem hitzebeständigen festen Material umfassend, das elektrisch nicht-leitend und nicht-reaktiv gegenüber dem ersten (7) und dem zweiten (4) Stoff und durchlässig für ein durch wenigstens einen Induktor (1) erzeugtes Magnetfeld ist, wobei die genannten Wände eine oder mehrere Durchgangsöffnungen (13, 14) aufweisen, und der erste Stoff (7) im flüssigen Zustand nicht-netzend ist gegenüber dem genannten festen Stoff der Wände
   - ein zweiter Behälter (3), bestimmt zu Aufnahme eines zweiten Stoffs (4) im festen oder flüssigen Zustand, dabei Wände aus einem hitzebeständigen festen Material umfassend, das elektrisch nicht-leitend und nicht-reaktiv gegenüber dem zweiten Stoff (4) und durchlässig für ein Magnetfeld ist, erzeugt durch wenigstens einen vorzugsweise gekühlten Induktor (1) ;
   - Einrichtungen (19, 20, 21, 22, 24) zum Tragen des oder der den ersten Stoff (7) enthaltenden ersten Behälter(s)s (6), um sie in Kontakt zu bringen mit dem genannten Volumen des zweiten Stoffs (4) und sie anschließend aus dem Volumen des zweiten Stoffs (4) herauszuziehen ;
   - Einrichtungen, gebildet durch wenigstens einen Induktor (1), außerhalb der Wände des zweiten Behälters (3) befindlich, um den (die) ersten Behälter (6) und den zweiten Behälter der Wirkung eines elektromagnetischen Feldes auszusetzen; vorzugsweise der oder die erste(n) Behälter (6) und der zweite Behälter (3) aus einem zwischen Aluminiumoxid und Bornitrid ausgewählten Stoff sind.

15. Vorrichtung nach Anspruch 14, bei der die genannten Öffnungen (13, 14) eine Form mit einem Querschnitt haben, der ausgewählt wird unter den Kreisen ; den Polygonen wie etwa den Quadraten, den Rechtecken, insbesondere den Rechtecken, deren Längen/Breiten-Verhältnis groß ist.

16. Vorrichtung nach einem der Ansprüche 14 und 15, bei welcher der (die) genannte(n) erste(n) Behälter (6) ein (mehrere) Zylinder mit kreisrundem Querschnitt mit Seitenwänden (11) und einer Basis- oder Bodenwand (9) ist (sind) ; vorzugsweise die Geometrie des Bodens des oder der genannten ersten Behälter(s) (6) gerundet ist (10).

17. Vorrichtung nach einem der Ansprüche 14 bis 16, bei welcher der (die) genannte(n) erste(n) Behälter (6) eine ringförmige Form (23) haben ; vorzugsweise die Geometrie des Bodens des oder der ersten Behälter (6) gerundet ist.

18. Vorrichtung nach einem der Ansprüche 14 bis 17, bei welcher der zweite Behälter (3) ein Zylinder mit kreisförmigem Querschnitt ist, der Seitenwände (16) und eine Basis- oder Bodenwand (15) hat.

19. Vorrichtung nach einem der Ansprüche 14 bis 18, bei welcher der zweite Behälter (3) den (die) ersten Behälter (6) umgibt und der zweite Behälter (3) sich näher bei dem Induktor oder den Induktoren (1) befindet, als der (die) erste(n) Behälter (6).

20. Vorrichtung nach einem der Ansprüche 14 bis 19, bei welcher der Induktor (1) durch eine Induktionsspule gebildet wird, deren Windungen (2) sich in der Nähe der Wände des zweiten Behälters (3) und insbesondere seiner Seitenwände dieser befinden, wenn zylindrisch ist.

21. Vorrichtung nach einem der Ansprüche 14 bis 20, die einen einzigen ersten Behälter (6), einen einzigen zweiten Behälter (3) und wenigstens einen Induktor (1) umfassen, die symmetrisch sind in Bezug auf ein und dieselbe senkrechte Mittelachse.

22. Vorrichtung nach Anspruch 21, die einen ersten zylindrischen oder ringförmigen Behälter (6) und einen zweiten zylindrischen Behälter (3) umfassen, wobei der erste Behälter (6) und der zweite Behälter (3) konzentrisch sind, der zweite Zylinder (3) den ersten Behälter (6) umgibt und dabei ihre Hauptachsen zusammenfallen ; vorzugsweise wird der Induktor (1) durch eine kreisförmige Windung oder Windungen (2) gebildet, welche die Seitenwand des zweiten Behälters (3) umgibt oder umgeben, konzentrisch zu diesen, wobei die Hauptachsen dieser Windung(en) (2) mit den Hauptachsen des ersten (6) und des zweiten (3) zylindrischen Behälters zusammenfallen.

23. Vorrichtung nach einem der Ansprüche 14 bis 22, bei der die genannten Einrichtungen zum Tragen des oder der genannten Behälter (6), ihrem Eintauchen in das genannte Volumen der zweiten Flüssigkeit (4), und ihrem Herausziehen aus dem genannten Volumen der zweiten Flüssigkeit (4), eine vertikale Stange (24, 33, 34) umfassen, an deren unterem Ende ein den (die) ersten Behälter (6) tragendes Element (30) befestigt ist ; vorzugsweise hat das den (die) ersten Behälter (6) tragende Element eine runde Karussel- oder Tonnenform (30), mit einer Mittelachse, die sich in der Verlängerung der genannten vertikalen Stange (33, 34) befindet, wobei mehrere erste Behälter (6) gemäß einem Kreis angeordnet sind, der konzentrisch ist zur Mittelachse der genannten Karussel- oder Tonnenform (30).

**Claims**

1. A process for bringing into contact, without mixing, a first material (7), consisting of a metal or of an alloy of several metals, in the liquid state, and of a second material (4), consisting of a salt or a mixture of several salts, in the liquid state, said first material (7) and said second material (4) in the liquid state being immiscible, said first material (7) being electrically conductive in the solid state and in the liquid state, and said second material (4) being electrically conductive in the liquid state and possibly in the solid state, in which the following successive steps are carried out:

    a) the first material (7), in the solid state, is placed in at least one first container (6) comprising a wall made of a refractory solid material, which is not electrically conductive, transparent to a magnetic field created by at least one inductor (1), and not reactive with regard to the first (7) and the second (4) materials, said wall comprising one or more through aperture(s) (13, 14); the first material (7) in the liquid state being non-wetting with regard to the said solid material of the wall;

    b) the said first container (6) is brought into contact with a volume of the second material (4) in the solid state, placed in at least one second container (3) made of a refractory solid material, transparent to a magnetic field created by at least one inductor (1), not electrically conductive, and not reactive with regard to the second material (4);

    c) the first (6) and second (3) containers are subjected to the action of an electromagnetic field (36) created by at least one inductor (1), by means of which induced electrical currents are generated in the first material (7) in the solid state, and cause the first material (7) to melt;

d) the first material (7) in the liquid state starts to move under the action of Laplace forces;

e) the second material (4) in the solid state starts to melt under the effect of a heat flux originating from the first container (6) by conduction and radiation;

f) an ionic conductivity appears in the second material (4), allowing induced electrical currents to develop, which accelerate the melting of the second material (4);

g) the second material (4) in the liquid state starts to move under the action of Laplace forces;

h) the first material (7) in the liquid state being in contact with the second material (4) in the liquid state at said apertures (13), the first material (7) in the liquid state is left in contact with the second material (4) in the liquid state for a sufficient duration for an exchange, transfer of material to occur between the first material (7) in the liquid state and the second material (4) in the liquid state;

i) the first container (6) is removed from the volume of the second material (4) in the liquid state;

j) the first container (6) is cooled until the first material (7) returns to the solid state, preferably steps b) to g) are accomplished in a primary vacuum of $10^{-2}$ absolute mbar to $10^{-1}$ absolute mbar and step h) is accomplished in an atmosphere of an inert gas such as argon.

2. A process according to claim 1, in which the current passing through the inductor (1) has an intensity of 100 to 3,000 ampere-turns, and preferably 100 to 1,000 ampere-turns, and has a frequency of 20 to 400 kHz, for example 200 kHz.

3. A process according to any one of the preceding claims, in which the current passing through the inductor (1) has a frequency which is chosen so as to adjust the skin thickness for the first (7) and second (4) materials, according to the geometry of the first (6) and second (3) containers and of the respective electrical conductivity properties of the first material (7) and of the second material (4).

4. A process according to any one of the preceding claims, in which the electromagnetic field created by the inductor (1) generates a magnetic induction flux of between $10^{-6}$ and $10^{-3}$ Wb.

5. A process according to any one of claims 1 to 4, in which the electromagnetic field created by the inductor (1) is a sliding field.

6. A process according to claim 5, in which there are several independent inductors, where each inductor consists of a single turn through which a current flows, and between each inductor the real part of the current is phase-shifted by 90° or $\pi/2$.

7. A process according to any one of the preceding claims, in which the density of the first material (7) in the liquid state and the density of the second material (4) in the liquid state are identical or similar, preferably the density of the first material (7) in the liquid state and the density of the second material (4) in the liquid state are similar and do not differ by more than 10%, preferably by no more than 5%, and even more preferably by no more than 1%.

8. A process according to any one of the preceding claims, in which the interfacial tension of the triple point, first material (7) in the liquid state/second material (4) in the liquid state/solid material of the wall of the first container (6), is high, preferably the interfacial tension of the triple point, first material (7) in the liquid state/second material (4) in the liquid state/solid material of the wall of the first container (6), is higher than 0.3 N.m$^{-1}$, and preferably higher than 0.6 N.m$^{-1}$.

9. A process according to any one of the prceding claims, in which the first material (7) in the liquid state has a surface tension greater than 0.3 N.m$^{-1}$, and preferably greater than 0.8 N.m$^{-1}$.

10. A process according to any one of the preceding claims, in which the said metal or the said alloy of several metals is chosen from among the reductive metals and alloys, such as aluminium and its alloys and in which the salt or salts is/are chosen from among the chlorides of alkaline metals, the chlorides of alkaline-earth metals, and the chlorides of aluminium such as, for example, LiCl or $AlCl_3$; and the fluorides of alkaline metals, the fluorides of alkaline-earth metals, and the fluorides of aluminium such as, for example, LiF, and $AlF_3$.

11. A process according to any one of the preceding claims, in which after step j) steps b) to j) are repeated, by bringing the first container (6) into contact with a volume of a third material, consisting of a salt or a mixture of several salts, different from the second material (4).

12. A process according to any one of the preceding claims, in which the said material transfer between the first (7) and the second (4) materials in the liquid state is a liquid/liquid extraction during which one of the constituents of the second material (4) in the liquid state passes into the first material (7) in the liquid state and/or one of the constituents of the first material (7) in the liquid state passes into the second material (4) in the liquid state ; preferably the said first material (7) is aluminium or an alloy of aluminium, and the second material (4) comprises salts of fluorides of alkaline or alkaline-earth metals containing aluminium fluoride, and in which one or more actinide fluoride(s) and one or more lanthanide fluoride(s) are dissolved; and during step h) the said actinide fluorides are chemically reduced by contact with the molten aluminium or aluminium alloy to the said actinides, which consequently pass into solution in the first material in the liquid state, whereas the lanthanide fluorides remain in the second material (4) in the liquid state.

13. A process according to claim 16, in which, after step j), steps b) to j) are repeated by bringing the said first container(s) (6) containing the aluminium or aluminium alloy and the actinides into contact with a volume of a third material constituted by one or more chlorides of alkaline or alkaline-earth metals containing aluminium chloride, whereby the actinides are chemically oxidised by contact with the said molten chlorides into actinide chlorides which pass into the third material in the liquid state, and the reduction of the aluminium chloride enables the aluminium metal, which may possibly be reused, to be generated.

14. A device for carrying out the process according to any one of claims 1 to 13, comprising:

- one or more first container(s) (6) intended to receive a first material (7) in the solid or liquid state and comprising walls made of a refractory solid material, not electrically conductive, not reactive with regard to the first (7) and the second (4) materials, and transparent to a magnetic field created by at least one inductor (1), said walls comprising one or more through aperture(s) (13, 14); the first material (7) in the liquid state being non-wetting with regard to the said solid material of the walls;
- a second container (3) intended to receive a volume of a second material (4) in the solid or liquid state, and comprising walls made of a refractory solid material, non-electrically conductive, not reactive with regard to the second material (4) and transparent to a magnetic field created by at least one inductor (1) preferably cooled;
- means (19, 20, 21, 22, 24) to support the first container(s) (6) containing the first material (7) in order to bring them into contact with the said volume of the second material (4), and then to remove them from the volume of the second material (4);
- means, constituted by at least one inductor (1), located outside the walls of the second container (3), to subject the first container(s) (6) and the second container (3) to the action of an electromagnetic field; preferably the said first container(s) (6) and the second container (3) are made of a material chosen from among alumina and boron nitride.

15. A device according to claim 14, in which the said apertures (13, 14) have a cross-section shape chosen from among circles; polygons such as squares or rectangles, and in particular rectangles having a high length/width ratio.

16. A device according to claims 14 and 15, in which said first container(s) (6) is/are cylinders with a circular cross-section including sidewalls (11) and a base or bottom wall (9); preferably the geometry of the bottom of said first container(s) (6) is rounded (10).

17. A device according to any one of claims 14 to 16, in which said first container(s) (6) have an annular shape (23); preferably the geometry of the bottom of said first container(s) (6) is rounded (10).

18. A device according to any one of claims 14 to 17, in which the second container (3) is a cylinder with a circular cross-section including sidewalls (16) and a base or bottom wall (15).

19. A device according to any one of claims 14 to 18 in which the second container (3) surrounds the first container(s) (6) and the second container (3) is closer to the inductor(s) (1) than the first container(s) (6).

20. A device according to any one of claims 14 to 19, in which the inductor (1) consists of an induction coil, the turns (2) of which are positioned close to the walls of the second container (3), and notably to its sidewalls when said second container is cylindrical.

21. A device according to any one of claims 14 to 20, which includes a single first container (6), a single second container (3) and at least one inductor (1), which are symmetrical relative to a single vertical central axis.

22. A device according to claim 21, which includes a first cylindrical or annular container (6) and a second (3) cylindrical container, the first container (6) and the second container (3) being concentric, with the second container (3) surrounding the first container (6), and their main axes coinciding; preferably the inductor (1) is constituted by one or more circular turn(s) (2) surrounding the sidewall of the second container (3) and concentric with said sidewall, the main axis of this/these turn(s) (2) coincide(s) with the main axes of the first (6) and of the second cylindrical containers (3).

23. A device according to any one of claims 14 to 22, in which the said means to support the said first container(s) (6), to immerse them in the said volume of the second liquid (4), and to remove them from the said volume of second liquid (4) comprise a vertical rod (24, 33, 34) at the lower end of which an element (30) supporting the first container(s) (6) is attached; preferably the said element supporting the first container(s) (6) has the shape of a carousel or circular barrel (30), comprising a central axis which extends the said vertical rod (33, 34), several first containers (6) being positioned in a circle concentric to the central axis of the said carousel or barrel (30).

FIG.1A

FIG.1B

FIG.2

FIG.3A

16 fentes ep = 1

Ø21,5

FIG.3B

FIG.4

FIG.5

FIG.6

FIG.7

FIG.8

FIG.9

FIG.10

FIG.11

FIG.12

FIG.13

FIG.14

Lignes de champs à 100kHz, 530A

FIG.15

FIG.16

FIG.17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2008080853 A1
- US 3156534 A
- US 3663178 A
- US 5254076 A
- US 3703463 A
- GB 2127318 A
- WO 9805185 A1
- WO 03106009 A1

### Littérature non-brevet citée dans la description

- *J. Mater Sci,* 2007
- *J. Mater. Sci.,* 2007
- *J. Mater. Sci,* 1991
- **CONOCAR, O. et al.** Promising pyrochemical actinide/lanthanide separation processes using aluminum. *Nuclear Science and Engineering,* 2006, vol. 153 (3), 253-261
- **CONOCAR, O. ; N. DOUYERE ; J. LACQUEMENT.** Extraction behavior of actinides and lanthanides in a molten fluoride/liquid aluminum system. *Journal of Nuclear Materials,* 2005, vol. 344 (1-3), 136-141
- **F.B. HILL ; L.E. KUKAKA.** Axial mixing and mass transfer in fused salt - liquid metal extraction column. *USAEC Report BNL-791,* 1963
- **D.D. SOOD.** Experimental studies for reprocessing of molten salt reactor fuels. *Proc. Symp. Chemical reactions in non-aqueous média and molten salts,* 06 Mars 1978
- **N. EUSTATHOPOULOS.** Tension superficielle. *Techniques de l'ingénieur M67,* Mars 1999
- **B. LE NEINDRE.** Tensions superficielles des composés inorganiques et mélanges. *Techniques de l'ingénieur K476-1*
- **E.W. DEWING ; PAUL DESCLAUX.** The interfacial tension between aluminium and cryolite melts saturated with alumina. *Metallurgical transactions B,* Décembre 1977, vol. 8B, 555-561
- **PIENG SHEN ; HIDETOSHI FUJII ; KIYOSHI NOGI.** Effect of temperature and surface roughness on the wettability of boron nitride by molten Al. *J. Mater. Sci.,* 2007, vol. 42, 3564-3568
- **X.M. XUE ; J.T. WANG ; M.X. QUAN.** Wettability and spreading kinetics of liquid aluminium on boron nitride. *J. Mater. Sci.,* 1991, vol. 262, 6391-6395
- **LACQUEMENT, J. et al.** Potentialities of fluoride-based salts for specific nuclear reprocessing: Overview of the R&D program at CEA. *Journal of Fluorine Chemistry,* 2009, vol. 130 (1), 18-21
- **MCFARLANE, H.F. ; M.J. LINEBERRY.** The IFR fuel cycle demonstration. *Progress in Nuclear Energy,* 1997, vol. 31 (1-2), 155-173
- **BRUNSVOLD, B.R.W.P.D.R.A.R.** Design and deveoppment of a cathod processor for electrochemical treatment of spent nuclear fuel. *Proceeding, 8th international conference on nuclear engineering,* 2000
- **HAYASHI, H. et al.** Pyrochemical reprocessing method for spent nuclear fuel and induction heating system to be used in pyrochemical reprocessing method. *Japan Nuclear Cycle Development Institute*
- **LASHLEY, J.C. et al.** In situ purification, alloying and casting methodology for metallic plutonium. *Journal of Nuclear Materials,* 1999, vol. 274 (3), 315-319